(19)

Europäisches
Patentamt
European
Patent Office
Office européen
des brevets

(11) **EP 1 584 168 B1**

(12) **EUROPEAN PATENT SPECIFICATION**

(45) Date of publication and mention
of the grant of the patent:
**10.01.2007 Bulletin 2007/02**

(21) Application number: **03730097.7**

(22) Date of filing: **22.05.2003**

(51) Int Cl.:
*H04L 25/02* (2006.01)

(86) International application number:
**PCT/EP2003/005380**

(87) International publication number:
**WO 2004/105335 (02.12.2004 Gazette 2004/49)**

(54) **APPARATUS AND METHOD FOR PROCESSING AN IMPULSE RESPONSE OF A CHANNEL**

GERÄT UND VORRICHTUNG ZUR VERARBEITUNG EINER KANALIMPULSANTWORT

APPAREIL ET PROCEDE DE TRAITEMENT D'UNE REPONSE IMPULSIONNELLE D'UN CANAL

(84) Designated Contracting States:
**DE GB**

(43) Date of publication of application:
**12.10.2005 Bulletin 2005/41**

(73) Proprietor: **NTT DoCoMo, Inc.**
**Tokyo (JP)**

(72) Inventor: **AUER, Gunther**
**80339 München (DE)**

(74) Representative: **Zinkler, Franz et al**
**Schoppe, Zimmermann, Stöckeler & Zinkler**
**Postfach 246**
**82043 Pullach bei München (DE)**

(56) References cited:
**EP-A- 1 014 636**          **US-A- 5 307 376**
**US-A1- 2002 176 485**

• LI Y G ET AL: "ROBUST CHANNEL ESTIMATION
FOR OFDM SYSTEMS WITH RAPID DISPERSIVE
FADING CHANNELS" IEEE TRANSACTIONS ON
COMMUNICATIONS, IEEE INC. NEW YORK, US,
vol. 46, no. 7, 1 July 1998 (1998-07-01), pages
902-915, XP000779691 ISSN: 0090-6778
• LI Y ET AL: "CHANNEL ESTIMATION FOR OFDM
SYSTEMS WITH TRANSMITTER DIVERSITY IN
MOBILE WIRELESS CHANNELS" IEEE JOURNAL
ON SELECTED AREAS IN COMMUNICATIONS,
IEEE INC. NEW YORK, US, vol. 17, no. 3, March
1999 (1999-03), pages 461-470, XP000804975
ISSN: 0733-8716 cited in the application
• BEEK VAN DE J-J ET AL: "ON CHANNEL
ESTIMATION IN OFDM SYSTEMS"
PROCEEDINGS OF THE VEHICULAR
TECHNOLOGY CONFERENCE. CHICAGO, JULY
25 - 28, 1995, NEW YORK, IEEE, US, vol. 2 CONF.
45, 25 July 1995 (1995-07-25), pages 815-819,
XP000551647 ISBN: 0-7803-2743-8 cited in the
application
• YANG B ET AL: "ANALYSIS OF LOW-
COMPLEXITY WINDOWED DFT-BASED MMSE
CHANNEL ESTIMATOR FOR OFDM SYSTEMS"
IEEE TRANSACTIONS ON COMMUNICATIONS,
IEEE INC. NEW YORK, US, vol. 49, no. 11,
November 2001 (2001-11), pages 1977-1987,
XP001076551 ISSN: 0090-6778 cited in the
application

Note: Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid. (Art.
99(1) European Patent Convention).

**Description**

The present invention is in the field of telecommunications and, in particular, in the field of channel estimation in a multiple input scenario, in which a receiver receives signals from more than one transmitting antennas, for which at least one of the communication channels is non-sample spaced.

The steadily-increasing demand for high data rates necessary for today's and future mobile radio applications require high data rate techniques efficiently exploiting the available band width or, in other words, the achievable channel capacity. Therefore, multiple input multiple output (MIMO) transmission systems have achieved considerable importance in recent years. MIMO systems employ a plurality of transmitting points, each of the transmitting points having a transmit antenna, and a plurality of receiving points, each of the receiving points having a receiving antenna, to receive signals being transmitted by the multiple transmitting points through different communication channels. In MIMO techniques, where the signals impinging from several transmitter antennas need to be separated, space - time codes or special multiplexing methods are used.

The signals impinging on each receive antenna are the super-position of the signals from $N_T$ antennas, where $N_T$ denotes a number of transmitting points. This implies new challenges for channel estimation. Channel parameters, like a channel impulse response or a channel transfer function are required for subsequent processing of the received data. While the separation of the signals corresponding to several transmitting points, each of them having a transmit antenna, is a challenging task, the extension from a receiver having one antenna to a system with several receive antennas is straight forward, as long as the signals are mutually uncorrelated. The structure of the channel estimation units is independent of the number of receive antennas $N_R$. The extension from a multiple input single output (MISO) system to a MIMO system is to employ $N_R$ parallel channel estimation units, one for each receiving point (receive antenna).

The use of coherent transmission techniques in wireless systems requires estimation and tracking of the mobile radio channel. Since the signals transmitted from multiple transmit antennas are observed as mutual interference, channel estimation for MIMO systems is different from the single transmit antenna scenario. MIMO systems can be used with a multi-carrier modulation scheme to further improve the communication capacity and quality of mobile radio systems. A prominent representative of multi-carrier modulation techniques is the orthogonal frequency division multiplexing (OFDM) technique.

Multi carrier modulation in particular orthogonal frequency division multiplexing (OFDM) has been successfully applied to a wide variety of digital communication systems over the past several years. In particular for the transmission of large data rates in a broadcasting scenario (e.g. digital TV), OFDM's superior performance in transmission over dispersive channels is a major advantage. OFDM has been chosen for various digital broadcasting standards, e.g. DAB or DVB-T. Another wireless application of OFDM is in high speed wireless local area networks (WLAN).

OFDM was first introduced in the 1960s. An efficient demodulation utilising the discrete Fourier transform (DFT) was suggested by S. Weinstein and P. Ebert, "Data Transmission by Frequency Division Multiplexing Using the Discrete Fourier Transform", IEEE Transactions on Communication Technology, vol. COM-19, pp. 628-634, Oct. 1971. By inserting a cyclic prefix into the guard interval (GI) longer than the maximum delay of the channel, intersymbol interference (ISI) can be eliminated completely and the orthogonality of the received signal is preserved. Since future mobile communication systems should support data rates several times higher than current systems, multi-carrier systems with proper coding and interleaving offer both efficient implementation through the application of the Fast Fourier Transform (FFT) and sufficient robustness to radio channel impairments.

Another OFDM-based approach, termed multi-carrier code division multiplex access (MC-CDMA), were spreading in frequency direction as has been introduced in addition to the OFDM modulation, as described in K. Fazel and L. Papke, "On the Performance of Convolutionally-Coded CDMA/OFDM for Mobile Communication Systems", in Proc. IEEE Int. Symposium on Personal, Indoor and Mobile Radio Communications (PIMRC'93), Yokohama, Japan, pp. 468-472, Sep. 1993. MC-CDMA has been deemed to be a promising candidate for the downlink of fourth generation systems. Moreover, a MC/CDMA system with a variable spreading factor has been proposed as described in H. Atarashi and M. Sawahashi, "Variable Spreading Factor Orthogonal Frequency and Code Division Multiplexing (VSF-OFCDM)", in 3rd International Workshop on Multi-Carrier Spread-Spectrum & Related Topics (MC-SS 2001), Oberpfaffenhofen, Germany, Sep. 2001.

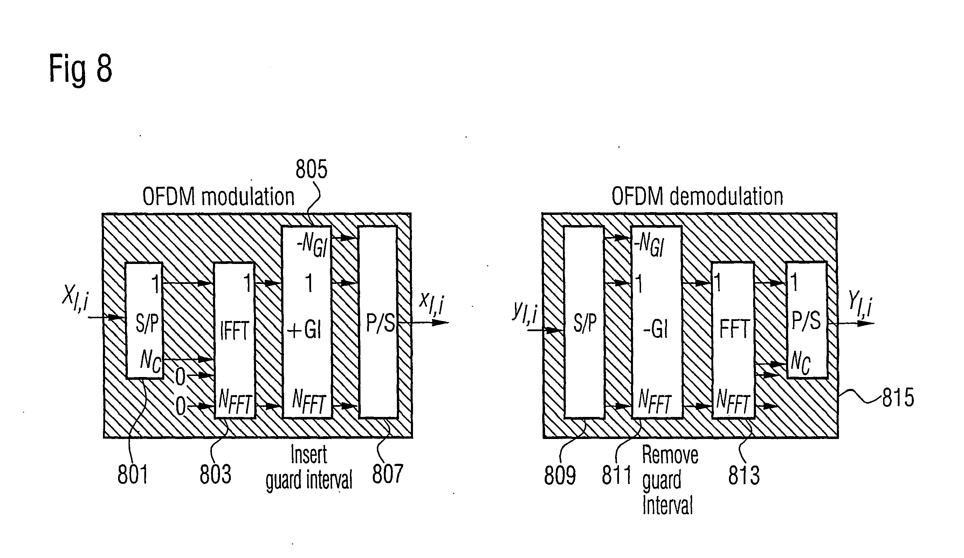

A block diagram of an OFDM system is shown in Fig. 8. For OFDM-based MIMO systems, one OFDM modulator is employed on each transmitting point, while OFDM demodulation is performed independently for each receiving point. For OFDM, the signal stream is divided into $N_C$ parallel substreams. The $i^{th}$ sub-stream commonly termed $i^{th}$ sub-carrier of the $l^{th}$ symbol block (OFDM symbol) is denoted by $X_{l,i}$. After serial to parallel conversion (S/P) performed by a S/P converter 801 an inverse discrete Fourier transform (DFT) with $N_{FFT}$ points is performed by an IFFT transformer 803 on each block and, subsequently, the guard interval (GI) having $N_{GI}$ samples is inserted by a GI block 805 to obtain a signal $x_{l,n}$ after parallel to serial (P/S) conversion performed by a P/S converter 803. After digital to analogue (D/A) conversion, the signal x(t) is transmitted over a mobile radio channel with an impulse response $h(t, \tau)$. The received signal at receive antenna $\nu$ consists of superimposed signals from $N_T$ transmitting points. Assuming perfect synchronisation, the received signal impinging at receive antenna $v$ at sampling instants $t=[n+lN_{sym}]T_{spl}$ is obtained

$$y_{l,n}^{(v)} \stackrel{\Delta}{=} y^{(v)}\left(\left[n+lN_{sym}\right]T_{spl}\right) = \sum_{\mu=1}^{N_T} \int_{-\infty}^{\infty} h^{(\mu,v)}\left(t,\tau\right) \cdot x^{(\mu)}\left(t-\tau\right)d\tau + n\left(t\right)\Big|_{t=[n+lN_{sym}]T_{spl}}$$

where n(t) represents additive white Gaussian noise, and $Nsym=N_{FFT}+N_{GI}$ accounts for the number of samples per OFDM symbol. The * operator denotes convolution. The signal $y_{l,n}$ received by the receiver is first serial to parallel (S/P) converted by a S/P converter 809 and the guard interval is removed by a GI block 811. The information is recovered by performing a discrete Fourier transform (DFT) on the received block of signal samples (in Fig. 8 a FFT transformer 813 is used) to obtain the output of the OFDM demodulation $Y_{l,i}$ in the frequency domain. The received signal at receive antenna $v$ after OFDM demodulation is given by

$$Y_{l,i}^{(v)} = \sum_{\mu=1}^{N_T} X_{l,i}^{(\mu)} \cdot H_{l,i}^{(\mu,v)} + N_{l,i}$$

where $X_{l,i}^{(\mu)}$ and $H_{l,i}^{(\mu,v)}$ denotes the transmitted information symbol and the channel transfer function (CTF) of transmit antenna $\mu$, at sub-carrier i of the $l^{th}$ OFDM symbol, respectively. The term $N_{l,i}$ accounts for additive white Gaussian noise (AWGN) with zero mean and variance $N_o$.

When transmitting an OFDM signal over a multi-path fading channel, the received signal will have unknown amplitude and phase variations. For coherent transmission, these amplitude and phase variations need to be estimated by a channel estimator.

In the following, reference is made to pilot symbol-aided channel estimation (PACE), where a sub-set of the transmitted data is reserved for transmitting known information, termed "pilot symbols". These pilots are used as side information for channel estimation. To formally describe the problem, the received pilot of OFDM symbol $ID_t$ at the $(iD_f)^{th}$ sub-carrier

$$Y_{\widetilde{ID}_t,\widetilde{ID}_f} = \sum_{\mu=1}^{N_T} X_{\widetilde{ID}_t,\widetilde{ID}_f}^{(\mu)} H_{\widetilde{ID}_t,\widetilde{ID}_f}^{(\mu)} + N_{\widetilde{ID}_t,\widetilde{ID}_f} \qquad \widetilde{l} = \{1,2,\cdots,L/D_t\}$$

$$\widetilde{i} = \{1,2,\cdots,N_c/D_f\}$$

where $X_{\widetilde{ID}_t,\widetilde{ID}_f}^{(\mu)}$ and $H_{\widetilde{ID}_t,\widetilde{ID}_f}^{(\mu,v)}$ denotes the transmitted pilot symbol and the channel transfer function (CTF) of transmit antenna $\mu$, at sub-carrier $i = \widetilde{iD}_f$ of the $l=\widetilde{iD}_t^{th}$ OFDM symbol, respectively. It is assumed that the CTF varies in the 1 and in the i variable, i.e. in time and in frequency. The term $N_{\widetilde{iD}_t,\widetilde{iD}_f}$ accounts for additive white Gaussion noise. Furthermore, l represents the number of OFDM symbols per frame, $N_c$ is the number of sub-carriers per OFDM symbol, $D_f$ and $D_t$ denote the pilot spacing in frequency and time, and $N_T$ is the number of transmit antennas. The goal is to estimate $H_{l,i}^{(\mu)}$ for all $\{l,i,\mu\}$ within the frame $Y_{l,i}$ is measured. Additionaly, the symbols $X_{l,i}^{(\mu)}$ at the location $(l,i)=(\widetilde{iD}_t, \widetilde{iD}_f)$ are known at the receiver. The channel estimation now includes several tasks:

    1. The separation of $N_T$ superimposed signals,

    2. Interpolation in case that $D_t$ or $D_f$ are larger than one, and

    3. Averaging over the noise $N_{\widetilde{iD}_t,\widetilde{iD}_f}$ by means of exploiting the correlation of $H_{\widetilde{ID}_t,\widetilde{ID}_f}^{(\mu,v)}$ .

In order to estimate $H_{l,i}^{(\mu)}$ given $Y_{\tilde{i}D_t,\tilde{i}D_f}$, there are $N_C$ equations with $N_C N_T$ unknowns, when one OFDM symbol is considered. Thus, a straight-forward solution of this linear equation system does, in general, not exist. By transforming $Y_{\tilde{i}D_t,\tilde{i}D_f}$ to the time domain, the number of unknowns can be reduced, making it possible to solve the resulting equation system in the time domain. This approach has the advantage that DFT-based interpolation, which is a standard technique, can be combined with estimation and separation of $N_T$ superimposed signals in one step, resulting in a computationally efficient estimator.

For time domain channel estimation for MIMO-OFDM systems, the received pilots of one OFDM symbol $Y_{iD_t,iD_f}$ are pre-multiplied by the complex conjugate of the transmitted pilot sequence $X_{\tilde{i}D_t,\tilde{i}D_f}^{*}$, for $1 \le \tilde{i} \le N'_P$. Then the result is transformed into the time domain via an $N'_p$-point IDFT. Subsequently, the $N_T$ superimposed signals are separated by a matrix inversion. The time domain channel estimate is obtained by filtering the output of the IDFT operation with a finite impulse response (FIR) filter. The DFT-based interpolation is performed simply by adding $N_c$-Q zeros for the channel impulse response (CIR) estimates, i.e. to extend the length of the estimate of length Q to $N_c$ samples. This technique is called of zero padding. An $N'_p$-point DFT transforms the CIR estimate of the pilots to the frequency response estimate of the entire OFDM symbol.

Estimators based on discrete Fourier transform (DFT) have the advantage that a computationally efficient transform in the form of the Fourier transform does exist and that DFT based interpolation is simple.

Ye Li et al. describes in "Channel Estimation for OFDM Systems with Transmitter Diversity in Mobile Wireless Channels", IEEE Journal on Selected Areas in Communications, vol. 17, no. 3, March 1999, a simplified approach for estimation of channel parameters. In order to reduce a computational complexity of the channel estimation scheme significant channel taps are identified during training blocks.

However, DFT-based (DFT=discrete Fourier transform) channel estimation schemes rely on the assumption that the communication channel to be estimated is a sample-spaced channel. Sample-spaced channels are channels having discrete channel coefficients at integer multiplies of the system sampling rate. This implies that the communication channel has discrete spectral components so that a continuous Fourier transform of the channel only contains discrete values and, hence, no channel information is lost when the continuous Fourier transform of the channel is sampled. However, this assumption does not hold for for example continuous channels or channels having real channel tap delays which are not multiples of the sample duration. As long as channel estimation techniques in the frequency domain are used, the sample-spaced channel model is sufficient. However, this does not always hold for time domain channel estimation, as mentioned by Jan-Jaap van der Beek at al. in "On Channel Estimation in OFDM-Systems", Proc. IEEE Vehicular Technology Conference, Chicago, USA, 1995.

DFT-based channel estimation techniques in the time domain allow an exact calculation of the channel impulse response by using an inverse Fourier transform. This is however not possible for a channel with arbitrary tap delays. Hence, DFT channel-based estimation techniques in the time domain always introduce an estimation error since a sample-spaced channel does not realistically model a real mobile radio channel.

To be more exact, an estimate of a channel impulse response derived from a sample-spaced channel transfer function of the non-sample spaced channel is not equal to the sampled continuous time signal, wherein sampling is performed in the time domain. This error is due to an energy distribution of the channel after the transform which is not concentrated to a certain number of coefficients but distributed over possibly all coefficients after the inverse DFT (IDFT) providing a time domain channel estimate. Hence, due to the energy distribution aliasing between coefficients of the channel input response occurs.

Moreover, since the channel energy is not concentrated on a certain number of coefficients, an estimation error occurs when coefficients being dominated by channel energy and appearing outside of the number of the assumed channel coefficients are neglected. With the term "dominated by channel" is meant that an energy of the considered coefficients is determined by the original channel coefficients without aliasing so that an aliasing energy is small.

Y. Li, et ("Simplified Channel Estimation for OFDM Systems with Multiple Transmit Antennas," IEEE Transactions on Wireless Communications, vol. 1, pp. 67-75, Jan. 2002), proposed a channel estimation scheme for OFDM with multiple transmit antennas which is based on the DFT transform. In particular, Li discloses a method for generating pilot symbols to be transmitted by multiple transmit and receive antennas and to be exploited at the receiver for channel estimation. These pilot symbols are generated by multiplying a training sequence having good timing and frequency synchronisation properties by a complex sequence introducing an additional phase shift between the pilot symbols and between the subsequent values of each pilot symbol, as well. To be more specific, each value of a training sequence is multiplied by a complex factor, which introduces a phase shift, wherein the phase shift is dependent of a number being assigned to the value being multiplied, on a number assigned to the corresponding transmitting point and a total number of transmitting points. The pilot symbols are orthogonal and phase shifted to each other. The pilot symbols are modulated by an OFDM scheme and transmitted through a plurality of communication channels. At a receiver, which is one of a plurality of receivers, a signal being received includes a super-position of the plurality of transmitted signals through the plurality of communication channels. Li et al presented further a design rule for the pilot tones based on phase-shifted sequences which is optimum in the mean squared error (MSE) sense. Moreover, a matrix inversion, which is, in general, required for the estimator, can be avoided by choosing orthogonal pilot sequences. However, due to a difficulty of obtaining perfect orthogonality between training sequences, matrix inversions may be necessary.

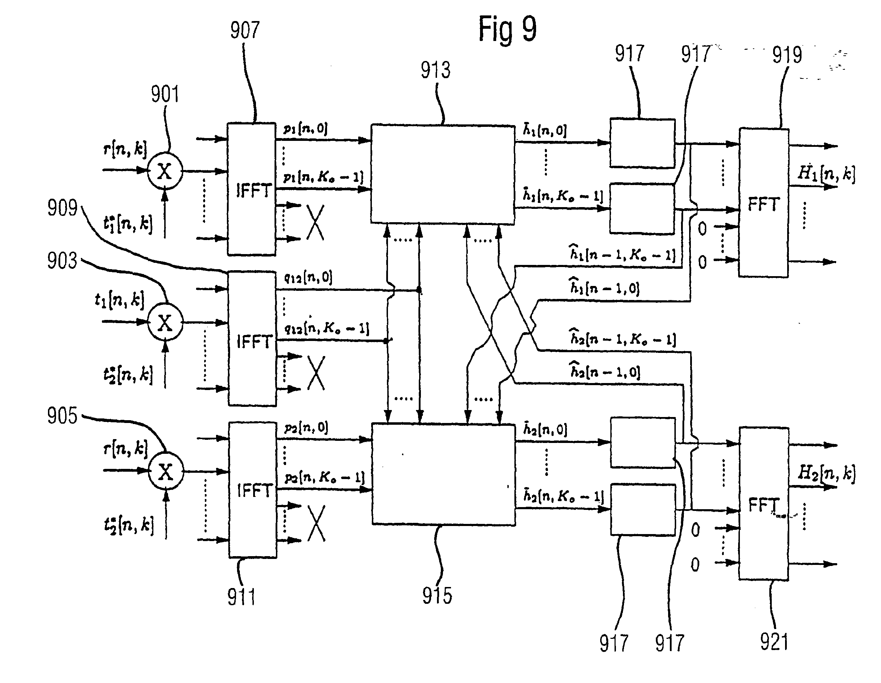

Fig. 9 shows prior art channel estimation scheme as disclosed by Li, where the case of two transmitting antennas is considered.

The prior art channel estimator includes a plurality of multipliers, wherein Fig. 9 shows only three multipliers being associated with the $k^{th}$ value of a $n^{th}$ received sequence r[n,k]. A first multiplier 901, a second multiplier 903 and a third multiplier 905 arranged in parallel include first and second inputs and outputs, respectively. The output of the first multiplier 901 is connected to a first inverse fast Fourier transform (IFFT) block 907, the output of the second multiplier 903 is connected to a second IFFT block 909 and the output of the third multiplier 905 is connected to the third IFFT block 911. It should be mentioned here that in total, K multipliers are connected to each IFFT block, wherein K denotes a length of a received sequence in the frequency domain, and a total number of 3K input signals are provided to the three IFFT blocks. Each of the IFFT blocks 907, 909 and 911 is operative to perform an inverse fast Fourier algorithm applied to K input values, respectively. Furthermore, each of the IFFT blocks 907, 909 and 911 includes a number of outputs, wherein only the first $K_0$ outputs of each IFFT block are used. The respective remaining outputs are, for example, connected to ground.

$K_0$ outputs of the first IFFT block 907 are connected to a first estimation block 913 and the first $K_0$ outputs of the third IFFT block 911 are connected to a second estimation block 915. The $K_0$ outputs of the second IFFT block 909 are connected to the first estimation block 913 and to the second estimation block 915, respectively. The first estimation block 913 and the second estimation block 915 have $K_0$ outputs, each of the outputs being connected to a corresponding filter 917 of a plurality of filters, each of the filters having an output, respectively. The $K_0$ outputs of the filters 917 corresponding to the first estimation block 913 are connected to a first Fourier transform (FFT) block 917 and the $K_0$ outputs of the filter 917 corresponding to the second estimation block 915 are connected to a second FFT block 921. The first FFT block 919 and the second FFT block 921 have K outputs, where K is, as stated above, the number of sub-carriers. Furthermore, due to the simplified algorithm,described by Li, the outputs of the first filters 917 corresponding to the first estimation block 913 are connected to the second estimation block 915 and the outputs of the filter 917 corresponding to the second estimation block 915 are further connected to the first estimation block 913, so that a plurality of feedback loops is established.

As stated above, Fig. 9 shows an example of the prior art estimator for the case of two transmit antennas, so that the received signal r[n,k] is a superposition of two transmitted signals being possibly corrupted by channel noise. The received signal is split into two received signals by a splitting means not shown in Fig. 9. The copies of the received signals are then multiplied by complex conjugated signals corresponding to the respective transmit antennas. Moreover, the pilot symbol transmitted by the first transmit antenna is multiplied by a complex conjugated version of the pilot symbol transmitted by the second antenna. More precisely, the K values of the first copy of the received signal are multiplied by K values of the complex conjugated version of the pilot symbol transmitted by the first antenna. The K values of the second version of the received signal is multiplied by K values of the complex conjugated version of the pilot symbol transmitted by the second transmit antenna. Furthermore, the K values of the pilot symbol transmitted by the first antenna is multiplied by K complex conjugated values of the pilot symbol transmitted by the second transmit antenna in order to obtain intermediate values required by the subsequent channel estimation algorithm.

As described above, all multiplications are performed in parallel, so that the K results from the multipliers 901 are fed to the first IFFT block 907. K results from the K multipliers 903 are fed to the second IFFT block 909. K results from the K multipliers 905 are fed to the third IFFT block 911. Each respective IFFT block is operative to perform an inverse fast Fourier transform in order to transform the frequency domain input signals into time domain output signals.

The first and the second estimation block, 913 and 915, are operative to perform a channel estimation algorithm based on the plurality of the input signals. More precisely, the first estimation block 913 receives $3K_0$ input signals to generate $K_0$ output signals corresponding to the channel impulse response of the first channel from the first transmit antenna to the considered receive antenna. The second estimation block 915 receives, in an analogue way, $3K_0$ input signals to generate $K_0$ output values corresponding to the second communication channel from the second transmit antenna to the receive antenna. The respective $K_0$ output values are then filtered by filters 917.

As stated above, the respective output signals from the filters are fed back to the first and second channel estimation blocks 913 and 915, since the channel estimation blocks 913 and 915 are operative to estimate the channel impulse response of the respective communication channels based on previously-calculated values and on current values obtained from the IFFT blocks. Each estimation block applies an estimation algorithm where matrix by vector multiplications instead of matrix inversions are performed in order to calculate desired channel impulse responses. After filtering and zero padding to a length, required by the following fast Fourier transform, a channel transfer function of the first and of the second communication channels are obtained.

As stated above, Li avoids matrix inversions by introducing an iterative scheme where matrix by vector multiplications appear and by exploiting the orthogonality of the pilot symbols. However, in order to calculate two channel impulse responses corresponding to the two communication channels, three inverse fast Fourier transforms, a splitting means and 3K multipliers are required. Moreover, the channel estimation algorithm applied by Li has still a high complexity due to the required matrix by vector multiplications. Hence, with an increasing number of transmit antennas, the complexity of the complicated estimation scheme proposed by Li rapidly increases due to the high number of complex valued multiplications. In addition, the multiplication of the two pilot symbols followed by an inverse Fourier transform is necessary in order to provide a plurality of intermediate values required for channel estimation. Hence, the estimation blocks 913 and 915 cannot operate independently, so that additional timing and control operations are necessary.

However, Li does not consider the case where the channels are non-sample spaced. Hence, the channel information scheme proposed by Li always suffer from an error.

Yang et al. ("Analysis of low-complexity windowed DFT-based MMSE channel estimator for OFDM systems", IEEE Transactions on Communications, volume 49 number 11, November 2001, pp. 1977-1987) propose a low-complexity windowed discrete Fourier transform based on a minimum mean square error channel estimator. In order to reduce a channel estimation error, a MMSE weighting is used. Moreover, frequency domain data windowing is proposed to reduce aliasing errors caused by non-sample spaced channels. Furthermore, Yang et al. propose a re-ordering of the time domain channel estimates, wherein in the interpolation case only the last coefficient of the channel estimate is copied to the beginning of the channel impulse response. Subsequently the coefficients of the channel impulse response are weighted by weighting coefficients for better estimation accuracy. In order to adopt a length of the channel impulse response to a subsequent N- point DFT, zeroes are appended to the weighted channel impulse response to create a new N sample sequence.

However, Yang et al. do not consider the case when a significant part of channel energy is spread over all coefficients since data windowing is applied in order to reduce the spectral leakage. In addition, only the last channel coefficient is copied at the beginning of the channel impulse response in order to obtain a cyclic channel impulse response required by the subsequent Fourier transform. Hence, the channel estimation scheme proposed by Yang et al. suffers from an estimation error when channel energy is significantly distributed over all coefficients and hence cannot be neglected, when the channel to be estimated is not sample-spaced. Moreover, Yang et al. consider only the case of single antenna systems. Hence, the proposed channel estimation scheme cannot directly be applied to a channel estimation for the MIMO case.

Moreover, since the energy of the channel coefficients is spread over a wide interval, the prior art estimation schemes described above suffer from the fact, that coefficients of the estimated channel impulse response may be in incorrect order of appearance. Hence, an estimation error may be introduced since certain substantial channel coefficients are removed.

EP-A-1014636 discloses a discrete multitone receiver has a time domain equalizer which is trained during initialization using an estimated channel impulse response. To eliminate wrap-around of the estimated CIR relative to the DMT frame alignment, and to remove leading zeroes, the estimated CIR is circularly advanced relative to the frame alignment for training the TDEQ In subsequent communications of DMT symbols via the channel and the TDEQ, the equalized samples of the received DMT symbols are buffered to compensate, in a frame alignment of the received DMT symbols, for the advance of the estimated CIR in the initialization process and for a delay in the TDEQ.

It is an object of the present invention to provide an enhanced concept for estimation of non-sample spaced channels.

This object is achieved by an apparatus for processing an impuls response of a channel in accordance with claim 1 or a method for processing an impuls response in accordance with claim 19 or a computer program in accordance with claim 20.

The present invention is based on the finding that an estimate of a channel impuls response obtained from a sample spaced channel transfer function of a non-sample spaced channel can be post-processed in such a way that an estimation error caused by the non-sample spaced nature of the channel is reduced by post processing the sample-spaced estimate of the channel impulse response.

In particular, it has been found that the channel coefficients appearing outside of the interval specified by an energy concentration associated with a sample spaced case can be found by performing a minimum search applied to a set of coefficients including the estimate of the channel impulse response. Once these coefficients are found, a further analysis can be performed in order to classify the coefficients appearing outside of the interval as dominated by channel energy or dominated by aliasing energy.

If the estimate of the channel impulse response obtained from sample spaced transfer function of the non-sample spaced channel is included in a set of discrete points, then each point has a discrete value, which may be complex, and an ordering index, wherein the ordering indices are associated with the respective discrete values. Since the channel is non-sample spaced, a rising edge of the channel input response appears after a falling edge associated with the channel impulse response in the set of discrete points, wherein the discrete points associated with the rising edge have ordering indices which are higher than ordering indices associated with a falling edge of the channel impulse response. If the channel is non-sample spaced and if there is a significant aliasing energy, that means if there is a significant coefficient energy spread over possibly all coefficients, then an energy of the rising edge associated with the channel impulse response has a dimension comparable to that of the falling edge of the channel impulse response.

For the sake of completeness it should be stated here that the falling edge may also be affected, for example additionally extended, by the non-sample spaced nature of the channel.

In order to find the rising edge, a point having a minimum value associated with a certain ordering index can be found by performing for example a minimum search applied to the set of the discrete points. Once the point having a minimum value is found, the points having ordering indices above the certain ordering index in the set of discrete values can be manipulated in order to obtain a processed set of points in which the influence of the non-sample spaced nature of the channel is reduced. The points having ordering indices above the certain ordering index can for example be set to zero if an energy of the coefficients above the certain ordering index is for example smaller than a pre-known channel energy or an energy concentrated within a pre-known interval derived from a pre-known channel length, wherein the discrete points included in the interval have ordering indices extending from a lowest ordering index in the set of the discrete points to an ordering index defining a boundary of the interval.

In order to find the minimum, an inventive minimum searcher can be operative to search the minimum value within an interval of points defined by a first and a last ordering index in the set of discrete points, wherein the interval, as stated above, is derived from a pre-knowledge of the channel like for example the channel energy or channel length, and wherein the interval includes less points than the set of discrete points. The last ordering index is associated with a point having the highest ordering index in the set of discrete points, and the first ordering index is set such that a size of the interval is determined by the channel length. The pre-knowledge of the channel mentioned above can be obtained for example from an additional energy estimation scheme based for example on an evaluation of an auto-correlation function of a received signal.

In accordance with the present invention, the inventive apparatus for processing the impulse response includes a minimum searcher of searching the point having the minimum value, wherein the minimum can be a minimum magnitude or a minimum absolute value in the set of discrete points.

The present invention provides a concept for improving an estimation accuracy, since the channel coefficients appearing because of a sample spaced processing of a non-sample spaced channel are analyzed and processed, so that always a decision can be made whether the non-regular coefficients are to be considered or not. Hence, a more accurate estimation scheme taking into account the non-regular effects due to a non-sample spaced channel is provided.

Additionally, the post-processing of the set of discrete points in order to reduce the regular effects associated with the non-sample spaced channel characteristics can be performed at low cost since essentially only compare operations have to be performed. Hence, an additional complexity is low.

Moreover, the inventive concept can be applied to channel estimation of non-sample spaced channel in the MIMO case in a straightforward way. If there are for example several channel impulse responses included in the set of discrete points, wherein each of the channel impulse responses is associated with a physical channel from one of a plurality of transmitting points to a receiving point, then each of the channel impulse responses can be analyzed towards the non-regular effects caused by sample spaced processing of a possibly non-sample spaced channel.

The inventive concept can be applied in order to improve the prior art channel estimation schemes as the one described by Lee, where an estimation error caused by the non-sample spaced nature of the channel can be reduced or even eliminated completely.

Moreover, if the channel impulse responses included in the set of discrete values alias with each other then the inventive concept provides a possibility to further separate the aliased channel impulse responses since between rising edge and falling edge a value having a minimum edge which is a local minimum in this case can be found. The channel impulse responses can hence efficiently be separated based on searching of a number of the local minima appearing the set of discrete values, wherein the number of the local minima is equal to or smaller than a number of transmitting points.

In order to further simplify the post-processing of the set of discrete points due to the non-sample spaced channel, a threshold operation instead of minimum search can be performed. The threshold can be provided such that the discrete values being below the threshold have magnitudes which are dominated by aliasing which means than an energy of each coefficient is determined by a distributed energy of other coefficients due to aliasing effects. On the other hand, the threshold can be lower than a discrete value having a magnitude dominated rather by the channel than by aliasing, which means that for example an energy of a discrete value above the threshold is mostly determined by the coefficient energy and not by the aliasing energy from the for example adjacent discrete values. Such a threshold may for example by found by evaluating an energy of the set of discrete values or for example by evaluating maximum values appearing in the set of discrete values, such that an energy of the values below the threshold is lower than 20% of the energy of the set of discrete values.

In order to process the set of discrete points on the basis of the threshold, the discrete values having magnitudes lower than the threshold may for example be discarded. That means that the values below the threshold can be zeroed or for example marked that they are below the threshold so that they are not taken into account in the subsequent processing. Alternatively, the discarded values can simply be removed by for example deleting the associated values from a memory.

An advantage of the inventive approach based on the threshold operation is that a post-processing of a channel impulse response affected by aliasing can be simplified and accelerated since simple threshold operations have to be applied in order to find substantial channel coefficients mostly contributing to the channel energy.

Moreover, since substantial channel coefficients appearing because of the non-sample spaced channel can be found and analyzed, the inventive concept provides an efficient way of re-ordering the set of discrete values such that substantial channel coefficients appearing due to the non-sample spaced nature of the channel are taken into account.

The inventive approach is not only suited for channel estimation in MIMO systems. It can also be applied to channel estimation in single carrier systems or in multiple access transmission systems like frequency division, multiple access or time division multiple access systems without major modification of an underlying system's design.

Further embodiments of the present invention are described in detail with respect to the following figures, in which:

Fig. 1        shows a block diagram of an embodiment of an inventive apparatus for processing an impulse response;

Figs. 2a-2d        demonstrate preferred embodiments of a processed set of discrete points resulting from a manipulated set of discrete points;

Fig. 3        demonstrates a preferred manipulation of a set of discrete points;

Fig. 4        demonstrates a further embodiment of a processed set of discrete points resulting from a manipulation of a set of discrete points;

Fig. 5        shows a block diagram of a further embodiment of an inventive apparatus for providing an impulse response;

Fig. 6        shows a further embodiment of a processed set of discrete points resulting from a manipulation of a set of discrete points;

Fig. 7        shows a block diagram of an inventive apparatus for processing an impulse response including a selector;

Fig. 8        demonstrates an OFDM modulation and OFDM demodulation scheme; and

Fig. 9        shows a block diagram of a prior art channel estimation scheme.

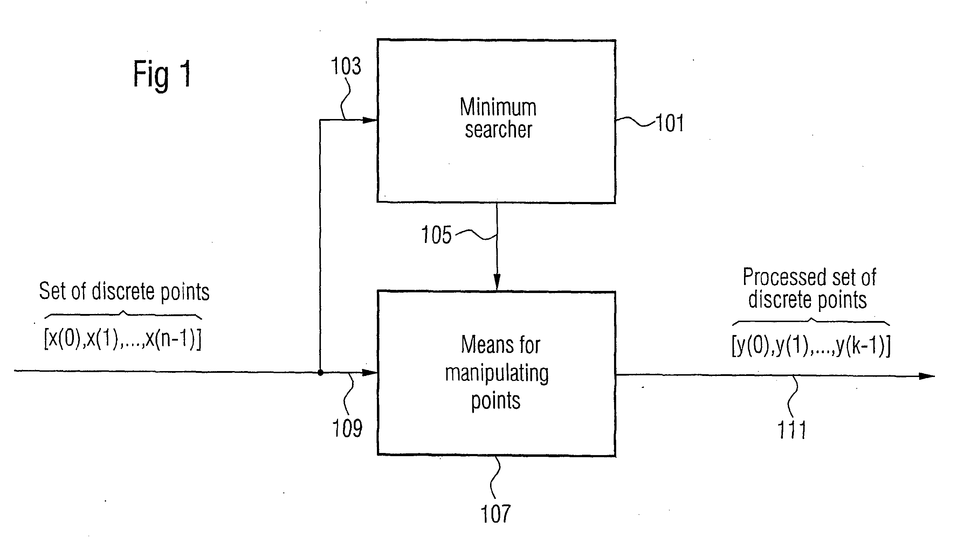

The apparatus shown in Fig. 1 comprises a minimum searcher 101 having an input 103 and an output 105. The output 105 is connected to a means 107 for manipulating points, the means 107 having an input 109 and an output 111.

Since the means 102 and the means 107 are arranged in parallel, a set of discrete points denoted by [x(0), x(1),...,x(n-1)] is provided to the input 103 of the minimum searcher 101 and to the input 109 of the means 107 for manipulating points. The set of discrete points includes a channel impulse response of a channel, wherein each point has a discrete value denoted by an 'x' and an ordering index appearing within a respective brackets. Since the channel is assumed to be non-sample spaced, the impulse response of the channel as represented by the set of discrete values has a falling edge, a rising edge appearing after the falling edge and a minimum between the falling edge and the rising edge, wherein the rising edge is present because of the non-sample spaced nature of the channel, that means because of sample spaced processing of the non-sample spaced channel. Moreover, either a position of the channel impulse response included in the set of discrete points nor a position the rising edge possibly appearing after the falling edge are known.

In order to reduce the effects of a possible channel noise, the set of discrete points may result from an averaging over at least two current set of discrete points corresponding for example to at least two transmitted OFDM symbols. In this case, the averaging is performed in time domain. Alternatively, the averaging over at least two OFDM symbols may be performed in the time domain, so that the set of discrete points is obtained from a transformation of an averaged time-domain signal.

In order to process the impulse response in such a way that non-regular effects due to the non-sample spaced nature of the channel are reduced or eliminated, the minimum searcher 101 is operative to search for a point having a minimum value, the minimum value being associated with a certain other index.

The minimum searcher 101 can for example be operative to search the minimum value within an interval of points defined by a first and a last ordering index in the set of discrete points. The first and the last ordering index define the interval which includes less points than the set of discrete points, which can be derived from a pre-knowledge of the channel, i.e. a pre-known channel length or a channel energy. The interval may be set such that an energy of discrete values in the interval is determined by the channel energy. For example, the energy of the discrete values can be greater than half the channel energy. Moreover, the energy of discrete values in the interval can be chosen such that the energy has a dimension of the channel energy, i.e. 80% of the channel energy.

If the channel length is pre-known, the last ordering index may be associated with a point having the highest ordering index in the set of discrete points, and the first ordering index is set such that a size, e.g. the length of the interval, is determined by the channel length. The channel length can for example be obtained from a length of a guard interval when for example an OFTM transmission scheme is used. Alternatively, a maximum channel length which typical for the considered transmission scenario, i.e. urban area, can be assumed. The maximum channel length is preferably the maximum channel length which can be expected considering the underlying transmission scenario, wherein the maximum channel length preferably should not be exceeded.

If instead of the channel length the channel energy is pre-known, then, accordingly, the last ordering index is associated with the point having the highest ordering index In the set of discrete points and the first ordering index is set such that an energy of discrete values in the interval is determined by the channel energy. As stated above, the channel energy can for example be derived from an auto- correlation function of a received signal or, alternatively, from a channel energy typical for the considered transmission scenario.

The points in the set of discrete points may be complex or real and may have positive and negative values. Hence, the minimum searcher 101 may be operative for determining magnitudes of points in order to search the smallest magnitudes among the magnitudes. The minimum searcher may further be operative for searching a global minimum in the set of discrete points or to search a local minimum within the predetermined interval. In addition, the minimum searcher 101 can be operative for searching a plurality of local minima.

The minimum searcher 101 provides via the output 105 the minimum or the minima found during the search to the means 107 for manipulating points. The means 107 can for example be operative to manipulate points having ordering indices above the certain ordering index associated with the considered minimum in the set of discrete values or in the interval of the set of discrete values. Based on the manipulation, a processed set of points is obtained, in which the influence of the non-sample spaced nature of the channel is reduced.

It should be remarked here, that the means 107 for manipulating points is not only operative for manipulating points having ordering indices above the certain ordering index. The value associated with a certain ordering index can be manipulated as well. Moreover, even a number of values having ordering indices smaller than the certain ordering index can be manipulated too.

The means 107 for manipulating points may further be operative to re-order the set of discrete points by for example placing points having ordering indices equal or above the certain ordering index before a point having a low ordering index of the set of discrete points. If the low ordering index is a lowest ordering index in the set of discrete points then the means 107 for manipulating can be operative to append points having ordering indices equal or above the certain ordering index to the beginning of the set of discrete points. Both operations can be performed by re-numbering the discrete points.

The means 107 for manipulating can further be operative to zero values of the points having ordering indices above the certain ordering index. In this case the respective values are set to zero, wherein zero is a value determined by either a machine accuracy or for example a systems ground or an other value representing logical or physical zero.

Instead of zeroing values having ordering indices above the certain ordering index, the means 107 for manipulating may further be operative to analyze the values above the certain ordering index in order to determine whether the values above the certain ordering index contain useful channel energy which would get lost if the values would be zeroed. Hence, the means 107 for manipulating points may be operative to compare a value of a point having a highest ordering index in the set of discrete points with a predetermined value. Since the points having the highest ordering index may represent a last value of a rising edge of a channel impulse response, the rising edge appearing after the falling edge of the channel impulse response due to the sample spaced processing of non-sample spaced channel, the means 107 may in this way analyze this value in order to determine whether there exist values having higher ordering indices than the certain ordering index which contribute to the channel impulse response and, hence, should not be neglected.

The predetermined value can for example be a first value in the set of discrete values, e.g. the value having a lowest numbering index in the set of discrete values. The comparison may be performed for example on magnitudes of values to be compared or on absolute values. However, the predetermined value can be any other value describing for example a magnitude level below which the samples may be ignored. Such a magnitude level may for example be determined by averaging over the magnitudes in the set of the discrete point.

The points above the minimum having ordering indices above the certain ordering index can for example be zeroed, when the value of the point having the highest index is smaller than the predetermined value. Otherwise, i.e. when the value is greater than or equal to the predetermined value the means 107 for manipulating points can be operative to place the points having values above minimum and having ordering indices higher than the certain ordering index at the beginning of the set of processed values which can be performed by re-ordering or simply by re-numbering.

Alternatively, the means 107 for manipulating points can be arranged to compare an energy of discrete points having ordering indices higher than the certain ordering index to a predetermined energy value. As stated above, this energy value may be determined from a channel energy. However, the predetermined energy value can be derived for example by calculating a total energy of the set of discrete points and to obtain the predetermined energy value by scaling the total energy of the discrete points, wherein the scaling factor may for example be equal to 0.4. Hence, the discrete values above the minimum and above the certain ordering index may be zeroed when the energy is smaller than the predetermined energy or otherwise to place the points above the minimum, the points having other indices higher than the certain ordering index at the beginning of the set of discrete values, as described above.

The means 107 for manipulating points may further be operative to extend a length of the processed set of discrete points to another length required by for example a subsequent Fourier transform. To do so, the means 107 for manipulating points can generate the processed set of discrete points such that a number of zeros is inserted between the falling edge and the rising edge of the channel impulse response in order to obtain a processed set having a length different from the length of the set of discrete points. If a subsequent Fourier transform is applied in order to transform the processed set of discrete points into frequency domain, the length of the processed set may be then equal to $2^n$, wherein n is an integer.

The means 107 for manipulating outputs the processed set of discrete points denoted by [y(0), y(1), ..., y(k-1)], wherein k denotes a number of discrete points of the processed set of discrete points, which may be different from a number n of discrete points of the set of discrete points.

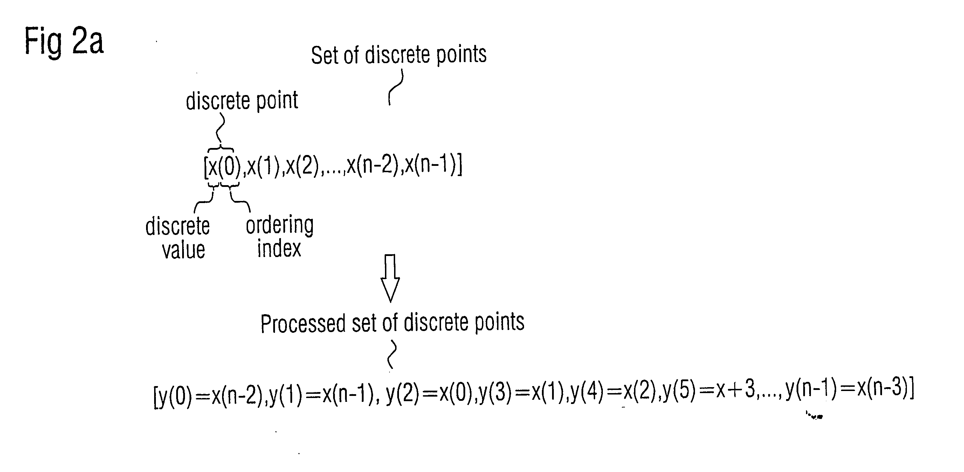

Fig. 2a demonstrates a preferred embodiment of a processed set of discrete points resulting from a manipulation of a set of discrete points.

The set of discrete points [x(0),x(1),x(2),..., x(n-2), x(n-1)] consists of n discrete points, wherein n is an integer. Each of the discrete points is characterized by a discrete value (x) being associated with an ordering index as depicted in Fig. 2a.

In Fig. 2a, a re-ordering performed by the means 107 for manipulating points is demonstrated, wherein a first point y(0) of the processed set of discrete points having a lowest ordering index (0) and a succeeding discrete point y(1) are obtained by attaching the last two discrete points of the set of discrete points to the beginning of the set of discrete points so that the processed set of discrete points contains the same discrete points as the set of discrete points, however, the points being associated with different numbering indices. For example, the first discrete point of the processed set of discrete points equals a discrete point x(n-2) before a last discrete point x(n-1) of the set of discrete points. Hence, the processed points may be obtained by simply re-numbering points in the set of discrete points.

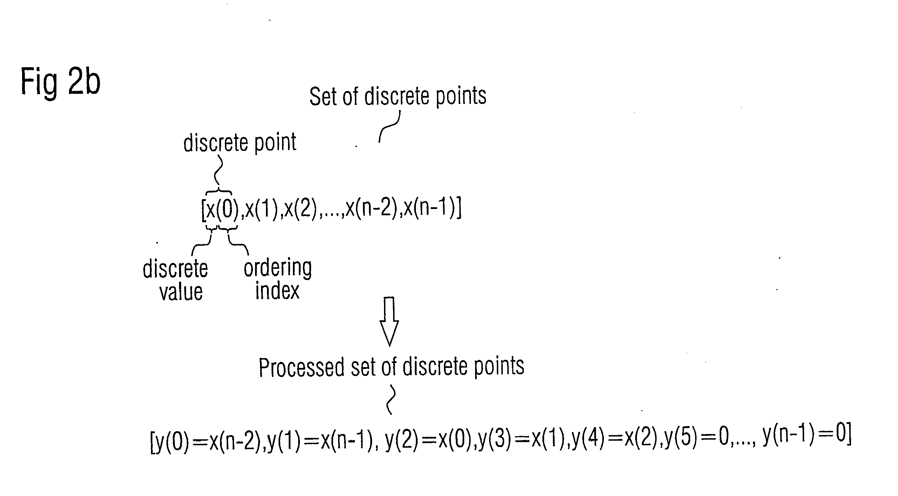

Fig. 2b demonstrates a further embodiment of the processed set of discrete points obtained by a manipulation of the set of discrete points based on minimum search.

Unlike the processed set of discrete points shown in Fig. 2a, the processed set of discrete points shown in Fig. 2b is obtained by manipulating the set of discrete points such that a first discrete point in the processed set equals the discrete point before the last discrete point in the set of discrete points and the second processed discrete points equals the last discrete points in the set of discrete points. By the way of an example only, the following three processed discrete points equal the first three discrete points from the set of discrete points, and any other following processed points starting with an ordering index (5) is zeroed.

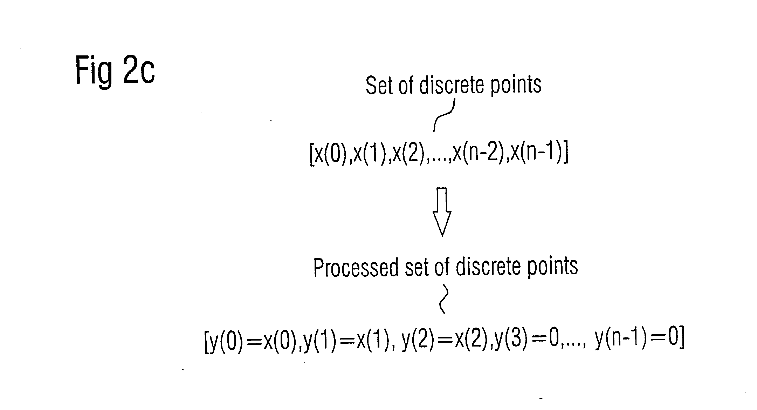

Fig. 2c demonstrates a further embodiment of the processed set of discrete points obtained by a manipulation of the set of discrete points based on minimum search.

The processed set of discrete points is obtained by manipulating the set of discrete points such that, by the way of example, the first three discrete points of the set of discrete points are taken into account and the other discrete points in the processed set of discrete points are set to zero or, in general, are discarded. The means 107 for manipulating points can for example provide such a processed set of discrete points, when for example the rising edge represented for the last two discrete points in the set of discrete points may be discarded (neglected), if for example an aliasing energy dominates the energy of the discarded coefficients.

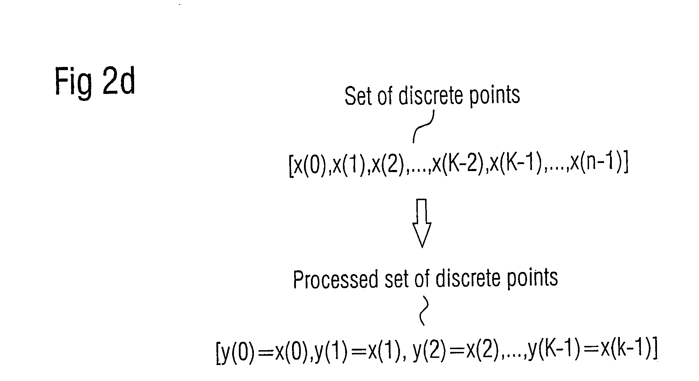

Fig. 2d demonstrates a further embodiment of a processed set of discrete points resulting from the manipulated set of discrete points, wherein only the first k discrete points of a set of discrete points are taken into account and wherein the remaining discrete points of the set of discrete points are discarded. Hence, the processed set of discrete points as shown in Fig. 2d has a length which is shorter than a length of the set of discrete points since only the relevant k values are taken into account, wherein the ordering index k-1 may denote the certain ordering index associated with a minimum value in the set of discrete points.

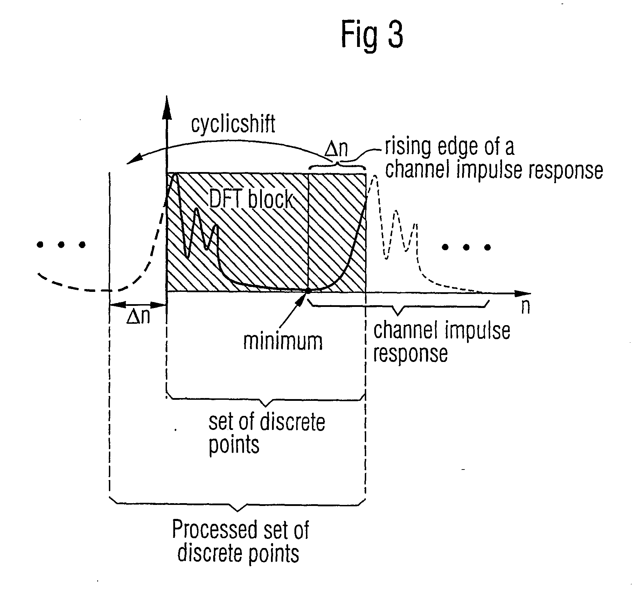

Referring to Fig. 3, the inventive concept of processing an impulse response of a channel included in a set of discrete points is demonstrated.

The set of discrete points shown in Fig. 3 is for example obtained from a discrete Fourier transform of a sample spaced channel transfer function of a non-sample spaced channel. Hence, the set of discrete points represents a DFT block as depicted in Fig. 3. Due to the non-sample spaced nature of the channel, aliasing as depicted by a periodic extension of the channel impulse response occurs.

Due to the aliasing effects, the channel impulse response included in the set of discrete points (DFT block) consists of discrete points in an incorrect order of appearance. To be more specific, a number of the last discrete points in the set of discrete points represents a rising edge of the channel impulse response as depicted in Fig. 3, wherein a second number of discrete points represents the remaining part of the channel impulse response appearing before the rising edge.

In order to complete the channel impulse response, the rising edge has to be found since its position is not known a priori. To do so, the inventive minimum searcher performs a minimum search on the set of discrete points in order to find the discrete points having a minimum value associated with the certain ordering index mentioned above. Hence, the minimum value marks a beginning of an interval consisting of $\Delta n$ values representing the rising edge of the channel impulse response. In order to re-order the channel impulse response such that the processed set of discrete points includes channel impulse response having coefficients in a correct order of appearance, the means 107 for manipulating can perform a cyclic shift by attaching the last $\Delta n$ discrete points to the beginning of the set of discrete points so that the processed set of discrete points includes a correct representation of the time domain channel impulse response. This representation is useful when equalizing the channel in time domain using i.e. a distributed feedback equalizer.

Alternatively, the means 107 may insert a number of zeros between the rising edge and a falling edge in order to extend a length of the set of discrete points such that a processed set of discrete points has a different length for example required for a subsequent Fourier transform.

Note that after separation and zero padding the cyclic shift should be removed. Otherwise the channel response in the frequency domain (after the FFT block) transformation would have an additional phase shift. It is also to note that shifting the separation boundaries or a cyclic shift are equivalent operations.

Also note that this shift does not even have benefit for one transmit antennas for the interpolation case. In this case, the zeros inserted for interpolation are inserted in the ends of the set of discrete points.

As stated above, the means 107 may further evaluate an energy of the rising edge in order to decide whether the rising edge could be zeroed or attached at the beginning of set of discrete points.

Fig. 3 demonstrates a single input single output case, wherein only one transmitting antenna is applied to transmit information to the receiving point. Hence, the set of discrete points as shown in Fig. 3 includes only one channel impulse response. However, as stated above, the inventive concept may also be applied to MIMO transmission systems where a plurality of transmitting points transmit signals, for example pilot sequences being orthogonal and phase-shifted to each other for channel estimation. Hence, if DFT-based channel estimation scheme is applied to channel estimation at the receiver, the phase shifts of the pilot symbols can be translated into delays, wherein an input signal including a super position of a plurality of signals based on the pilot sequences transmitted through a plurality of communication channels is transformed into a transformed signal, so that the phase shifts between the plurality of pilot symbols are translated into delays. Hence, a set of discrete values of the transformed signals can be divided into a plurality of groups, each group having a delay with respect to the preceding groups, wherein each group represents channel information of a channel, for example channel impulse response. In order to transform the phase shifts into delays or in other words in order to exploit the phase shifts for channel estimation, a single transformer, for example a DFT based transformer, can be applied for transforming the phase shifts into delays, since the delayed groups actually include channel information.

Hence, in a MIMO scenario, the set of discrete points may contain several channel impulse responses as groups of discrete points, wherein two subsequent groups are delayed with respect to each other.

However, since real channels are often non-sample spaced so that the groups of points including the channel information of the respective channel are aliasing with each other. Furthermore, at least one of the group, i.e. channel impulse response, cannot be characterized by simply selecting a number of successive discrete points since for example a raising edge may appear after a falling edge of the particular channel impulse response as described above in detail.

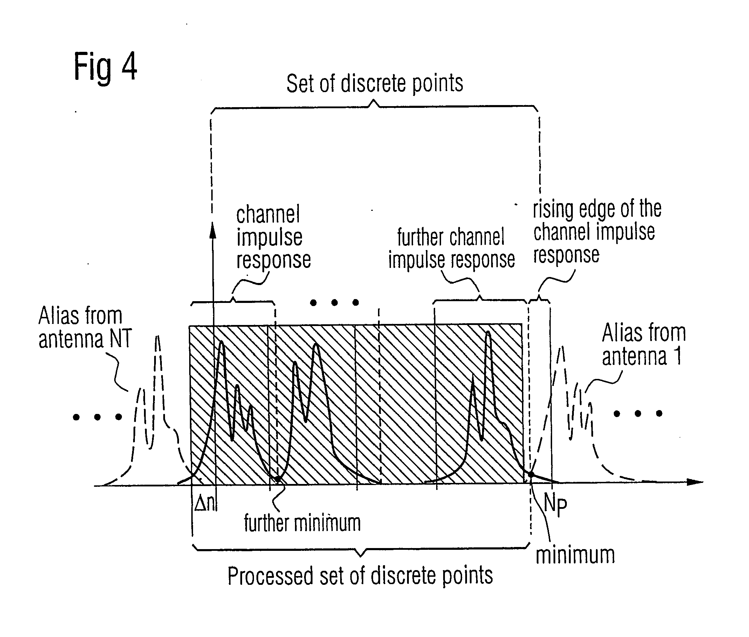

Fig. 4 demonstrates a set of discrete points including a number of channel impulse responses (groups) delayed with respect to each other. In particular, the number of channel impulse responses included in the set of discrete points equals to $N_T$, wherein $N_T$ denotes a number of antennas (transmitting points) transmitting information to a receiving point.

Due to the performed transform, the set of discrete points includes the number of delayed groups representing the channel impulse responses. In particular, a first number of discrete points of the set of discrete points corresponds to a channel impulse response, a second number of discrete points corresponds to an another channel impulse response being delayed with respect to the first number of discrete points and so forth.

Due to the non-sample spaced nature of the channel, a number of last discrete points in the set of discrete points corresponds to a rising edge of the channel impulse response, so that the rising edge has ordering indices which are substantially higher than other indices associated with the first number of discrete points. Moreover, aliasing between the respective channel impulse responses occurs and, additionally, a periodic repetition of the set of discrete points depicted by alias from antenna and alias from antenna $N_T$ is present.

As depicted in Fig. 4, the rising edge of the channel impulse response aliases with a further channel impulse response so that between the further channel impulse response and the rising edge of the channel impulse response a number of coefficients appear which can be assigned to both: the rising edge of the channel impulse response and the further channel impulse response.

Referring now to the channel impulse response and to the further channel impulse response shown in Fig. 4, the further channel impulse response corresponds to a further channel extending from a further transmitting point to a common receiving point, wherein the further channel has a further falling edge aliasing with the rising edge as described above due to the non-sample spaced nature of the channel characterized by the channel impulse response. However, it should be noted here that the the further channel as represented by the further channel impulse response may be non-sample spaced as well.

In order to obtain a processed set of discrete points, the inventive minimum searcher 101 as shown in Fig. 1 may be operative for searching for minimum within an interval defined by a first and a second ordering index, wherein the second ordering index is determined by the highest ordering index of a set of discrete points denoted by Np. The first ordering index may for example be obtained by subtracting a pre-known maximum channel length from the second ordering index which yields the interval.

Based on the minimum found within the interval, the means 107 for manipulating points may be operative to generate the processed set of discrete points such that points having ordering indices above the minimum point, i.e. above the certain ordering index, become ordering indices in the set of processed values below a point having a lowest ordering index in the set of discrete values. This may be performed by for example appending the values corresponding to the rising edge at the beginning of the set of discrete points so that the processed set of discrete points is generated by re-ordering the set of discrete points.

Moreover, the means 107 for manipulating points may be operative to insert a number of zeros between the falling edge of the channel impulse response and the rising edge of the channel impulse response for extending the channel impulse response such that the processed set has a length different from a length of the set of discrete points in order to adapt the set of the processed points to a length required by a subsequent Fourier transform.

The minimum searcher 103 may be further operative for searching several minimum values such that the channel impulse responses included in the set of discrete points may be separated. For example, the minimum searcher 107 may be operative to search for a further minimum as depicted in Fig. 4 appearing after the falling edge of the channel impulse response. In order to select the channel impulse response, the means 107 may be operative to zero for discrete points between the further minimum and the minimum so that the remaining discrete points may be assigned as discrete points as associated with the channel impulse response.

Moreover, the means 107 for manipulating points may be operative to append further discrete points associated with the rising edge of the first channel impulse response to the beginning of the set of discrete points in order to obtain the processed set of discrete points as depicted in Fig. 4, wherein the channel impulse responses are represented by groups of respective successive discrete points in the set of discrete points.

Moreover, the means 107 for manipulating points may be operative for re-ordering the set of discrete values such that points having ordering indices above the certain ordering index become ordering indices lower than the ordering indices associated with the following edge in the processed set of discrete points.

Instead of performing a minimum search, a threshold operation may be performed as well in order to analyze the set of discrete values and to detect discrete values contributing significantly to the channel impulse response. The threshold may be determined by a means for providing a threshold such that the threshold is higher than a discrete value having a magnitude which is dominated by aliasing in such that the threshold is lower than a discrete value having a magnitude dominated by the channel rather than by the aliasing. The threshold may for example be determined from a pre-known channel length or the pre-known channel energy such that in energy of the discrete points (coefficients) below the threshold is significantly smaller than the pre-known channel energy, i.e. 0.2 the energy.

Alternatively, the threshold may be determined starting from an energy of the set of discrete points which always can be calculated. Hence, the threshold may be obtained by calculation of an energy of the set of discrete points and determining the threshold such that the values below the threshold have no significant contribution to the total energy of the discrete points, for example, the threshold may be set such that the energy of discrete points below the threshold is less than 10% of the total energy.

It should be stated here that the means for providing the threshold may be arranged such that an iterative threshold calculation is performed. For example, the means for providing the threshold may provide a first threshold, calculate an energy of values below the threshold, provide a second threshold, calculating an energy of the discrete point below the second threshold etc. until a threshold is found which for example satisfies the energy requirement described above.

In order to perform the comparison operation, the apparatus may preferably comprises a means for comparing discrete values of the set of discrete values to the threshold. For example, the comparison may be performed by subtracting absolute values of the discrete values from the thresholds:

In order to process the values below the threshold, the inventive apparatus may further comprise means for discarding discrete values, having for example a magnitude being lower than the threshold. In particular, the means for comparing and discarding may be operative on discrete points attributed to the rising edge of the channel impulse response.

The advantage of the threshold based approach described above is that the threshold operation can be performed in connection with for example minimum searching, so that values above the minimum can further be analyzed and discarded or not discarded depending on the chosen threshold.

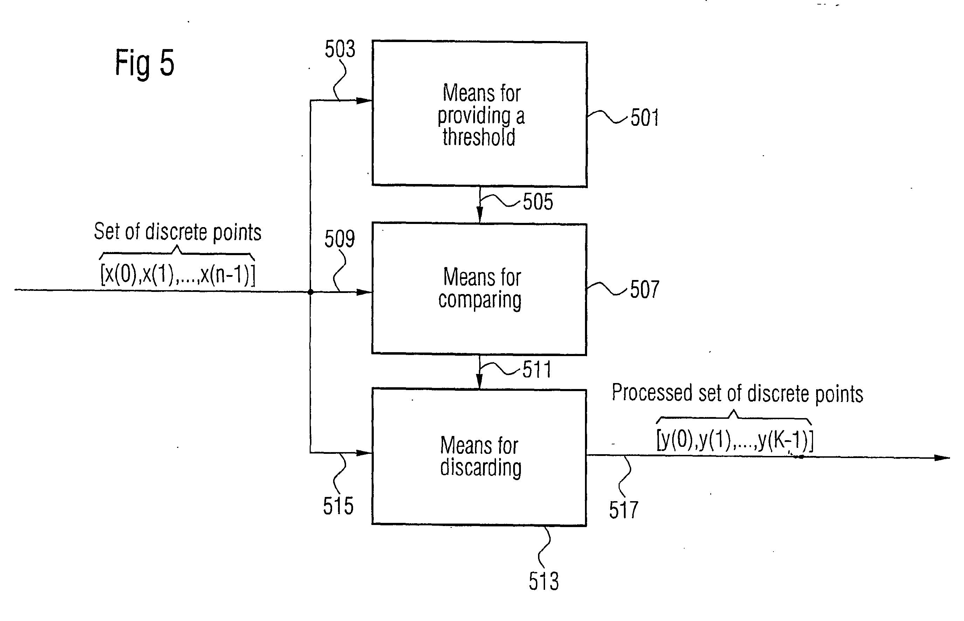

Fig. 5 shows an inventive apparatus for processing an impulse response of a channel included in a set of discrete points, each point having a discrete value and ordering index as described above in order to obtain a processed set of discrete values in which aliasing induced by a non-sample spaced channel is reduced.

The apparatus shown in Fig. 5 comprises means 501 for providing a threshold having an input 503 and an output 505. The output 505 is connected to a means 507 for comparing. The means 507 for comparing has an input 509 and an output 511 connected to a means 513 for discarding. The means 513 for discarding has an input 515 and an output 517. Furthermore, the input 503 of the means 501, 509 of the means 507 and 515 for the means 513 are connected with each other so that the means 501, the means 507 and the means 513 are arranged in parallel, so that via the respective input a set of discrete points denoted by [x(0), x(1),.., x(n-1)] is received at the same time. The means 513 for discarding provides via the output 517 a processed set of discrete points denoted [y(0), y(1), ..., y(k-1)].

It should, however, be stated here, that the inputs 503, 509 and 515 must not be connected with each,other for as long as the means 501, 507 and 513 are capable of operating on the set of discrete points or even on a number of copies of the set of discrete points.

The set of discrete points may for example include channel information associated with a single communication channel between a transmitting point and a receiving point. However, the set of discrete points may also contain a plurality of channel information, for example a plurality of channel impulse responses, each respective channel impulse response corresponding to one of a plurality of communication channels from a corresponding transmitting point of a plurality of transmitting points to the receiving point. Furthermore the set of discrete points may result from a sample spaced Fourier transform of another set of discrete points being a frequency domain representation of a non-sample spaced time domain channel.

The means 501 for providing a threshold is arranged to determine the threshold such that the threshold is higher than a discrete value, the magnitude of which being dominated by the aliasing and such that the threshold is lower than a discrete value having a magnitude being dominated by the channel rather than by the aliasing. In other words, an energy of the discrete values being dominated by aliasing is dominated by the aliasing energy due to an energy spreading of one value over several values because of the non-sample spaced nature of the channel. On the other hand, the values being dominated by the channel have an energy being substantially determined by the corresponding channel coefficient and not by aliasing energy.

The means 510 for providing a threshold may be operative to provide the threshold on the basis of an energy of discrete points in the set of discrete points. For example, a total energy of the set of discrete points can be calculated, so that the threshold can be derived by a suitable scaling of the total energy, so that the threshold i.e. equals to 20% of the total energy. However, the means 510 for providing a threshold may be operative in several ways as described above. For example, the means 501 may be arranged to determine the threshold such that an energy of the processed set of discrete values is higher than for example 80% of the total energy of the set of discrete values.

In order to calculate the energy of the processed set of discrete values a feedback loop may be implemented, so that the threshold depending on an energy criterion can accurately be calculated as described above. Moreover, the threshold may be determined within a sub-interval in the set of discrete points in a similar way as described in connection with the minimum searcher. For example, the means 510 for providing a threshold may for example operate on a sub-interval including a number of last discrete points in the set of discrete points, wherein the number may be determined by for example a pre-known channel length. An energy of the sub-interval may further be compared to an energy of a second number of points starting with the points having a lowest ordering index in the set of discrete points, wherein the second number of discrete points can be associated with a remaining part of the channel impulse response, when the number of points is associated with a rising edge of the channel impulse response. If the energy of the number of discrete points is less than say 20% of the energy of the second number of discrete points, than the means 501 for providing a threshold is capable of determining the threshold such that the points to be discarded fulfill the energy criterion.

The means 501 provides the determined threshold via the output 505 to the means 507 for comparing. The means 507 is operative for comparing values to the threshold, wherein the values are from the set of discrete points.

The means 507 for comparing may operate on the whole set of discrete points. However, the compare operation may efficiently be performed in terms of for example hardware complexity, when the values to be compared have ordering indices greater than a predetermined index, wherein the predetermined index may be derived from a pre-knowledge of a channel length or a channel energy by the way of example only. In order to increase an efficiency of compare operation, the predetermined index may be chosen such that it represents an estimated or pre-known length of the channel without aliasing that means that it represents an interval having discrete values being dominated by the channel rather than by aliasing. For example, the predetermined index may be chosen such that it is for example greater than 2/3 of a channel length starting with a lowest ordering index in the set of discrete points.

The means 507 for comparing can for example control the means 503 for discarding via the output 511. To be more precise, the means 507 for comparing may output a control information such as ordering indices of values to be discarded or other information enabling the means 513 for discarding to operate on discrete points in order to obtain the processed set of discrete values which may include a shortened input channel impulse response.

The means 513 for discarding may be operative to zero the values to be discarded depending on the information obtained from the means 507 for comparing. In this way, a shortened channel impulse response can be achieved since zeroed values can be excluded from the subsequent signal processing. Moreover, the means 513 can be operative for only discarding values having other indices greater than the predetermined index and being smaller than the threshold so that the means 513 for discarding can operate in a more efficient way in terms of hardware complexity or processing speed. As stated above, the predetermined index may be derived from a pre-knowledge of channel length or channel energy so that the predetermined index represents an estimated length of the channel without aliasing.

As said above, the set of discrete points may contain channel information of a plurality of communication channels due to a MIMO transmission scenario. Hence, the set of discrete values includes in this case a further impulse response of a further channel, the further channel extending from a further transmitting point to a common receiving point.

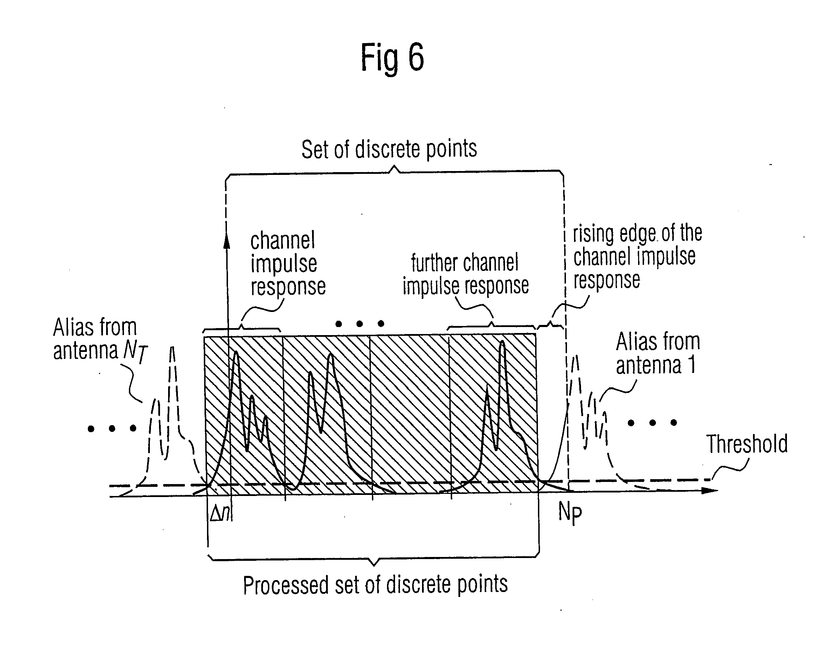

Referring to Fig. 6, a processed set of discrete points with respect to a set of discrete points is shown.

In contrast to the arrangement shown in Fig. 4, in Fig. 6 a threshold is depicted in order to explain a functionality of the inventive apparatus discussed in connection with Fig. 5.

The threshold provided to the means 507 for comparing may be applied to the whole set of discrete points so that the values below the threshold are discarded. However, the means 507 for comparing may be operative on an interval including the rising edge of the channel impulse response. In this case only values between the falling edge of the further channel impulse response and the rising edge of the channel impulse response being lower than the threshold are to be discarded. However, it should be remarked here, that also values equal to the threshold may be discarded since the threshold operation depends on a definition of an upper bound (maximum value) given by the threshold.

If the threshold operation is applied to the whole set of discrete points, then the channel impulse responses included in the set of discrete points can be separated by for example a select operation so that a respective number of discrete points can be assigned to the respective channel impulse response as described above.

Additionally, the apparatus shown in Fig. 5 may further comprise a minimum searcher for searching a point having a minimum value in the set of discrete values and wherein the means for discarding is further operative for discarding the values below the threshold appearing after the minimum which is associated with the minimum value in the set of discrete points. This approach has the advantage, that the threshold can be applied only in a respective vicinity of a respective minimum, wherein the respective minimum can be a global minimum or a local minimum within a given interval. Hence, the channel impulse responses included in the set of discrete points can efficiently be separated since only necessary operations have to be performed which lead to an increased speed and reduced complexity of the inventive approach.

Additionally, the apparatus shown in Fig. 5 may comprise a means for manipulating points being operative on the processed set of discrete points having for example a number of discrete points above the threshold. In this case, a first discrete point of the number of discrete points succeeding a discrete point being below the threshold and having a highest ordering index of the points below the threshold and a second discrete point having a highest ordering index of the processed set of discrete points may be determined, wherein the first and the second discrete point are attributed to an interval including the rising edge of the channel impulse response having discrete points above the threshold and having ordering indices greater than an ordering index associated with the minimum.

Based on this information the means for manipulating may be operative to re-order the set of processed values to obtain a processed set of values such that the number of discrete points is placed before a discrete point having a low ordering index in the processed set of discrete points. The low ordering index may be a lowest ordering index in the processed set of discrete points. In this case, the discrete points associated with the rising edge of the channel impulse response having magnitudes greater than the threshold and ordering indices greater than the ordering index associated with the minimum are attached to the beginning of the processed set of discrete points as depicted in Fig. 6, wherein $\Delta n$ denotes a number of attached coefficients (values).

Furthermore, the means for manipulating may be operative to append a number of zeros to the processed set of discrete points for extending a length of the processed set of discrete points which can for example be equal to $2^n$, wherein n is an integer.

Moreover, the means for manipulating may be operative for inserting a number of zeros between a falling edge and a rising edge, wherein the index denoting the place the zeros have to be inserted may be for example determined by an index associated with the minimum value. Referring again to Fig. 6, a number of zeros may be inserted between the falling edge of the further channel impulse response and the rising edge of the channel impulse response in order to extend the length of the processed set of discrete points. Moreover, the means for manipulating may be operative to zero the values after the channel impulse response and before the rising edge of the channel impulse response so that the processed set of discrete points includes only the points associated with the channel impulse response.

In order to select channel information of a plurality of channels in a MIMO case, as discussed in connection with Figs. 4 and 6, the means for manipulating may be able to select a respective channel impulse response of the channel impulse responses on the basis of a minimum search or a threshold operation. Hence, the means for manipulating can be arranged as a selector for selecting a group from the set of discrete points, wherein the group, as discussed above, includes discrete points representing the channel impulse response, wherein the group includes a number of discrete points.

The number of discrete points may be determined by a pre-known channel length. It should be noted here that the number of discrete points included in a group must not necessarily consist of points succeeding each other. Referring again to Fig. 6, it can be seen that the group containing the complete channel impulse response (also including the rising edge) includes discrete points which are not succeeding each other due to the rising edge of the channel impulse response separated from the remaining part of the channel impulse response.

Hence, if the rising edge is considered a significant part of the channel impulse response, then the means for manipulating may perform a re-ordering of the processed set of discrete points prior to selecting in order to achieve groups consisting of successive discrete points characterizing a particular channel impulse response, so that the groups including the channel information can be separated by for example selecting the number of successive discrete points starting with a discrete point having a lowest ordering index in the set of discrete points or in the processed set of discrete points. Moreover, when none of the communication channels is a non-sample spaced channel, the further manipulation prior to selecting is not necessary, since the means for manipulating selects the group in a straightforward way by successively selecting the number of successive discrete points.

However, the inventive minimum searcher may be operative for selecting a first and a second minimum in order to select the groups more efficiently. The first minimum may be associated with a first ordering index, wherein the first minimum is for example in a first interval having a length determined by a pre-known channel length or by a maximum channel length. Maximum channel length is determined by a length of a longest channel among the channels to be estimated.

On the contrary, the second minimum may be associated with a second ordering index, wherein the second minimum is in a second interval having a length determined by the pre-known channel length. The second interval may be determined by the falling edge of the further channel impulse response and the rising edge of the channel impulse response, both shown in Fig. 6. The first interval may include discrete points associated with the remaining part of the channel impulse response and with for example a rising edge of a succeeding channel impulse response.

In order to select the group including channel information from a particular channel, prior manipulation of the values to be selected, as described above, can be avoided, if the selector selects a first set of discrete points extending from the discrete point having the lowest ordering number in the set of discrete points to the discrete point having the first order index, so that the most significant part of the channel impulse response is found, and to select a second set of successive discrete points extending from the discrete point having the second ordering index to the discrete point having the highest ordering index in the set of discrete points. In this case, the second set of discrete points is the rising edge of the channel impulse response and the first set of discrete points is the part of the channel impulse response after the rising edge.

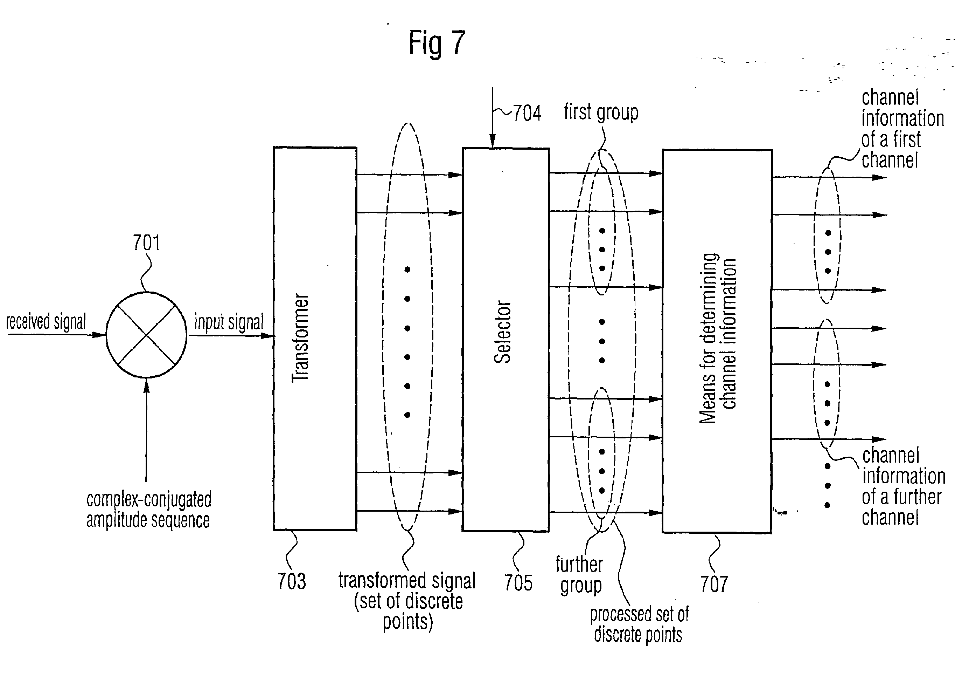

In Fig. 7, a block diagram of an inventive apparatus for estimating a plurality of channels including a selector is shown.

The apparatus shown in Fig. 7 comprises a multiplier 701 having two inputs and one output. The output of the multiplier 701 is connected to a transformer 703 having a plurality of outputs for providing a transformed signal. The plurality of outputs of the transformer 703 is connected to a selector 105 having a control input 704 providing a delay information for proper group selection. The selector 705 has a plurality of outputs, wherein a number of outputs is equal to a number of inputs of the selector 705 and, thus, equal to a number of outputs of the transformer 703. The plurality of outputs of the selector 105 is connected to a means 707 for determining channel information, the means 707 having a plurality of outputs.

The apparatus shown in Fig. 7 demonstrates the inventive low complexity channel estimation scheme based on pilot signals being orthogonal to each other within the predetermined orthogonality range and having a phase shift to each other. If the pilot sequences comprised of pilot symbols, each of the pilot sequences corresponding to one of a plurality of transmitting points, are scrambled by the same complex amplitude sequence, then the pilot sequences include a complex amplitude sequence and phase information. The transmitting points then transmit signals based on the pilot sequences through a plurality of communication channels, wherein prior to transmitting, the pilot sequences are modulated using, for example, an OFDM modulation scheme. A signal received at a receiving point (not shown in Fig. 7) includes a superposition of the plurality of transmitted signals and possibly a plurality of superimposed distortion signals representing channel noise. After a demodulation performed by applying an OFDM demodulation scheme, a received signal shown in Fig. 7 is obtained. The multiplier 701 is, hence, operative to multiply the received signal by a complex conjugated version of the amplitude sequence (scrambling sequence) in order to remove the amplitude information and phase shift introduced to each of the pilot sequences by scrambling. The received signal is a set of successive discrete received signal values and the multiplier 701 is operative to perform a single complex multiplication for each value of the set of successive discrete received signal values and a corresponding value of a set of successive discrete complex conjugated amplitude signal values, so that after a number of single complex multiplications, a set of successive discrete input values of an input signal is obtained.

The input signal includes a superposition of signals based on a plurality of pilot sequences, for example, based on a first, a second and a third pilot sequence being transmitted from a first, a second and a third transmitting point. Hence, the input signal contains phase shifts of the pilot sequences, wherein the phase shifts are not removed by further pre-multiplications. Instead, the input signal is provided to the transformer 703 being operative to translate the phase shifts into delays.

The transformer 703 can be any transformer being able to translate phase shifts into delays. For example, the transformer 703 performs a Fourier transform or a fast Fourier transform or a discrete Fourier transform or an inverse Fourier transform or an inverse fast Fourier transform or an inverse discrete Fourier transform of the input signal. In particular, the input signal is a set of successive input signal values and the transformer is operative to transform the set of successive input signal values into the transformed signal, which is a set of discrete values, wherein a total number of discrete values of the set of discrete values of the transformed signal is equal to a total number of input signal values in the set of input signal values.

Hence, the transformer is operative to perform a single transform algorithm applied to the set of discrete values, wherein the transform algorithm can be, for example, one of the algorithms mentioned above applied to the total number of input signal values. The length of the input signal corresponds to a length of a training or pilot sequence multiplied by a total number of transmitting points. Hence, the length of the transformed signal is equal to the length of the input signal.

The selector 705 selects a number of groups, the number of groups being equal to the total number of transmitting points in order to obtain selected groups, wherein each group consists of an equal number of successive discrete values of the set of discrete values of the transformed signal. The selector is operative to select, as a group, a number of successive discrete values, wherein the number of successive discrete values is equal to the total number of discrete values of the transformed signal divided by the total number of transmitting points, wherein the total number of discrete values is obtained by the transformer.

For example, the selector is operative to select groups such that a first discrete value of the set of discrete values is a first discrete value in a first group at the output of the selector and a first discrete value of a second group of discrete values is a discrete value in the set of discrete values succeeding a discrete value having the highest order of the values selected to obtain the first group, wherein the first group and the second group have corresponding distinct delays, the delays being obtained by the transformer. If the input signal includes, in a superimposed manner, a third signal based on a third pilot sequence transmittable from a third transmitting point, the transformer translates a further phase shift of the third group into a further delay, so that a third group of the set of discrete values includes channel information of a third channel from the third transmitting point to the receiving point and the selector selects the third group from the set of discrete values to obtain a selected third group having a further delay associated with the third group. Hence, if the input signal includes a plurality of superimposed signals corresponding to a plurality of transmitting points, the selector 705 selects a further group of the plurality of groups on the basis of a delay corresponding to the further group as depicted in Fig. 7.

The groups being selected by the selector based on a delay information via the control input 704 or based on a fixed setting (no control input is required in this case) are provided to the means 707 for determining channel information based on the selected groups. If the pilot symbols are orthogonal to each other within the orthogonality range and if the pilot symbols have a predetermined phase shift with respect to each other, then each of the selected groups contains channel information corresponding to a particular channel from a particular transmitting point to the receiving point. In this case, the means 707 is operative to receive the selected groups and to output the selected groups, since each of the groups includes channel information of the particular channel, as will be shown later. In order to output the selected groups, the means 707 can be designed in such a way that the inputs of the means 707 are directly connected to the outputs of the means 707. If there is no channel noise or if the channel noise is negligible, then the means 707 for determining channel information outputs the selected groups, each group including, for example, a channel impulse response of a particular channel as channel information. Furthermore, the means 707 can include a time frequency conversion means, for example, a DFT based transformer for obtaining a channel transfer function by transforming the determined channel impulse response of a particular channel into the frequency domain in order to obtain the channel transfer function as the channel information.

The selector 705 may further be controlled via the control input 704, wherein the minimum searcher controlling the selector is not shown for the sake of clarity.

Depending on pilot sequences applied to channel estimation, a group of the selected groups and a further group of the selected groups may include channel information of a channel and channel information of a further channel in a superimposed manner. Furthermore, depending on the design of pilot sequences, a group of the selected groups may include a superposition of the channel information of a channel being multiplied by a phase shift factor and of a further channel information of a further channel being multiplied by a further phase shift factor, wherein a further group of the selected groups may include a superposition of the channel information of the channel being multiplied by the complex conjugated phase shift factor and of the further channel information of the further channel being multiplied by the complex conjugated further phase shift factor, wherein the phase shift factor and the further shift factor are caused by the design of the pilot sequences. In this case, the means 107 is operative to determine the channel information of the channel and the further channel information of the further channel using the group and the further group by, for example, solving a set of linear equations and removing the additional phase shift factors. For example, the means 707 applies phase shift operations and additions and/or subtractions to the group and to the further group in order to determine channel information. If, for example, pilot sequences based on columns of a Hadamard matrix are applied to channel estimation, then the phase shift factor is a function of a phase shift of 180˚ divided by the total number of transmitting points. Using this information, the known phase shifts are removed to determine the channel information.

If the channel noise cannot be neglected, then the channel information in the selected groups is affected by a distortion signal related to channel noise. In order to suppress the distortion signal, the means 107 may comprise an estimator being operative to estimate the channel information from the corrupted channel information by, for example, applying a minimum mean squared error (MMSE) estimator, a least squares (LS) estimator, a maximum-likelihood (ML) estimator or a maximum a posteriori (MAP) estimator (being a particular embodiment of a ML estimator). If the MMSE estimator is applied to estimate channel information, then the estimator performs filtering of the corrupted channel information, wherein the filter has filter coefficients, wherein each filter coefficient is determinable from a multiplication of a first matrix by a second matrix, wherein the first matrix is a cross-correlation (in general: cross-covariance) matrix between channel information and corrupted channel information and the second matrix is an inverse of an autocorrelation (in general: auto-covariance) matrix of the corrupted channel information.

The pilot sequences applied to channel estimation in an OFDM transmission system are commonly used to modulate discrete carriers in a multi-carrier modulation scheme at a predetermined time instant corresponding to the time instant at which pilot sequences are to be transmitted. Hence, the inventive apparatus may further comprise a controller for detecting the input signal in a received signal and for enabling the transformer, the selector or the means for detecting only when the input signal including pilot sequences is detected in the received signal.

Alternatively, the pilot sequences can be used to modulate the same pilot carrier in a multi-carrier modulation scheme in order to estimate time varying coefficients of a channel transfer function of a communication channel, wherein the coefficients of the channel transfer function are determined by the pilot carrier. Hence, the inventive apparatus can comprise a controller for detecting the pilot carrier in a received signal, including successive multi-carrier modulated symbols and for collecting values of the pilot carrier at time instants corresponding to the transmitting instants to obtain the input signal, wherein the channel information obtained by processing the input signal using the transformer selector and the means for detecting includes a behaviour of a multi-carrier channel from transmitting points to receiving points defined by the pilot carrier over time. The channel information including the behaviour of the multi-carrier channels is, for example, related to a velocity of a mobile receiver causing, for example, a Doppler shift related to the relative velocity between transmitter and receiver. In order to estimate the Doppler shift, changes of a coefficient of the channel transfer function over time can be exploited.

If the pilot sequences are transmitted at distinct time instances and are not succeeding each other, preferably an interpolation is performed in order to obtain intermediate values of channel information between time instances corresponding to the time instants at which pilot sequences are transmitted. Hence, the means for determining channel information may comprise a further means for interpolation being operative to interpolate between a first channel information obtained at a first time instants and a second channel information obtained at a second time instance, wherein the intermediate interpolated channel information can, for example, be determined by applying a well known Wiener interpolation technique (Wiener filter) based on the first and the second channel information or, for example, by applying a Lagrange interpolation scheme.

Furthermore, the inventive apparatus may comprise means for transmitting the processed set of discrete points having the channel impulse response in correct order of appearance to a data detector. The data detector may be for example operative for performing a further channel estimation, for example for using an influence of channel noise.

In order to mathematically describe a sample spaced nature of the channel model, reference is made to Fig. 3.

A channel is defined to be sample space if the tap delays $\tau_q$ are multiples of the sample instant $T_{spl}$, i.e.

$$\tau_q = T_{spl}\beta_q; \quad 1 \le q \le Q_0$$

where $\beta_q$ is an arbitrary integer, equal to or larger than zero. Without loss in generality, the tap delays are sorted in ascending order such that $0 \le \beta_1 < \beta_2 < \cdots < \beta_{Q0} \le Q$. In this case $H_{l,i}^{(\mu)}$ becomes the discrete Fourier transform of the channel impulse response $h_{l,n}^{(\mu)}$. Hence $H_{l,i}^{(\mu)}$ can be expressed in matrix notation

$$H_l^{\prime(\mu)} = F h_l^{\prime(\mu)}$$

where F represents the DFT-matrix of a dimension $N_{GI} \times N_c$, defined by

$$\{F\}_{n,i} = e^{-j2\pi ni/N_{FFT}}; \qquad 0 \le i \le N_c - 1, \quad 0 \le n \le N_{GI} - 1.$$

Unfortunately, for a real channel the tap delays $\tau_q$ will not be multiples of the sample duration $T_{spl}$. As long as channel estimation techniques in the frequency domain are used, the sample spaced channel model is sufficient. Channel estimation techniques in the time domain, which are based on a DFT transformation, allow an exact retaining of channel impulse response by an inverse discrete Fourier transform (IDFT) $H_l^{\prime(\mu)} = F^H h_l^{\prime(\mu)}$. It is demonstrated below that this is not possible for a channel with arbitrary $\tau_q$. Hence, for channel estimation techniques in the time domain, the sample spaced channel does not realistically model a real mobile radio channel.
For the non-sample spaced channel model the tap delays are not multiples of the sample instant at least for one tap. This model should be used for time domain channel estimation which is based on DFT transformation. For channel estimation techniques in the time domain, the following estimate is of interest

$$h_{nss_l}^{\prime(\mu)} = F^H H_l^{\prime(\mu)} = F^H T h_l^{\prime(\mu)}$$

wherein T represents a transformation matrix transforming the channel impulse response into frequency domain and $h_{nss_l}^{\prime(\mu)}$ denotes the $\mu^{th}$ channel impulse response obtained from a sample spaced Fourier transform of a channel transfer function of a non-sample spaced channel.

In scalar form, the entries of $h_{nss_l}^{\prime(\mu)}$ become

$$h_{nss_{l,n}}'^{(\mu)} = \frac{1}{N_P'} \sum_{q=1}^{Q_0} \tilde{h}_{l,q}^{(\mu)} \sum_{i=1}^{N_c} \exp\left( j2\pi \cdot (i-1) \cdot \frac{(n-1)T_{spl} - \tau_q^{(\mu)}}{T_{spl}N_{FFT}} \right)$$

$$= \sum_{q=1}^{Q_0} h_{l,q}'^{(\mu)} \frac{\sin\left( \frac{\pi\left[(n-1)T_{spl} - \tau_q^{(\mu)}\right]}{T_{spl}} \right) \cdot \exp\left( -j\pi \frac{\left((n-1)T_{spl} - \tau_q^{(\mu)}\right) \cdot (N_{FFT}-1)}{T_{spl}N_{FFT}} \right)}{N_{FFT} \sin\left( \frac{\pi\left[(n-1)T_{spl} - \tau_q^{(\mu)}\right]}{T_{spl}N_{FFT}} \right)}$$

with $0 \le \tau_1^{(\mu)} < \tau_2^{(\mu)} < \cdots < \tau_{Q_0}^{(\mu)} \le Q$ . For the derivation of the above equation, the properties of exponential series were exploited. Let the exponential series be defined by

$$f_N(\tau/T) \overset{\Delta}{=} \frac{1}{N} \sum_{i=0}^{N-1} e^{-j2\pi i\tau/(NT)}$$

$$= \frac{\sin(\pi\tau/T)}{N\sin\left( \frac{\pi\tau}{NT} \right)} \cdot e^{-j\pi\tau\cdot(N-1)/(NT)} \cdot$$

With this definition, the following is obtained

$$h_{nss_{l,n}}'^{(\mu)} = \sum_{q=1}^{Q_0} h_{l,q}'^{(\mu)} f_{N_{FFT}}\left( \frac{nT_{spl} - \tau_q^{(\mu)}}{T_{spl}} \right) \cdot$$

It is seen that the power of each tap is not localized at a certain position but is spread over the whole time range. This is due to windowing the channel transfer function by a rectangular window with bandwidth $N_c/T$, which corresponds to a convolution with a sinc-function in the time domain. This phenomena is called leakage. Only if $\tau_q^{(\mu)}$ is an integer, the leakage disappears and the sample spaced channel is obtained. Furthermore, since the channel transfer function is sampled in frequency, its transform in the time domain is periodic with $N_{FFT}$ thus $h_{nss_{l,n}}'^{(\mu)} = h_{nss_{l,n+mN_{FFT}}}'^{(\mu)}$ with m being an arbitrary integer. Since $h_{nss_{l,n}}'^{(\mu)}$ is periodic and not time limited, aliasing cannot be avoided. This is a problem especially for DFT-based interpolation.

In order to minimize the effects of aliasing, $h_{nss_{l,n}}'^{(\mu)}$ is cyclically shifted by $\Delta n = (N_{FFT}-Q)/2$ samples

$$h_{cyc_{l,n}}^{\prime(\mu)} \overset{\Delta}{=} h_{nss_{l,n}}^{\prime(\mu)} * \delta_{n-\Delta n} \approx \begin{cases} h_{nss_{l,n-\Delta n}}^{\prime(\mu)}; & 1 \leq n \leq Q_{nss} \\ 0; & Q_{nss} < n \leq N_{FFT} \end{cases}$$

where the * denotes cyclic convolution. Then, the non-sample spaced channel has the major signal part in the interval $1 \leq n \leq Q_{nss}$. This allows to truncate $h_{cyc_{l,n}}^{\prime(\mu)}$ to the most $Q_{nss}$ significant taps. Such an approximation will be necessary for the derivation of channel estimation techniques in the time domain. The cyclic shift is solely done to simplify the notation. Especially when dealing with interpolation, the formal description is significantly easier within a coherent interval $1 \leq n \leq Q_{nss}$ instead of the original intervals $1 \leq n \leq Q_{nss} - \Delta n$ and $N_{FFT} - \Delta n < n \leq N_{FFT}$.

With these definitions the following equation can be written

$$h_{cyc_{l,n}}^{\prime(\mu)} = \sum_{q=1}^{Q_0} h_{l,q}^{\prime(\mu)} f_{N_{FFT}} \left( \frac{(n - \Delta n)T_{spl} - \tau_q^{(\mu)}}{T_{spl}} \right), \qquad n = \{1, \cdots, N_{FFT}\}$$

where the cyclic shift of $\Delta n$ samples has been included. In order to illustrate the effects of the cyclic shift again a reference is made to Fig. 3 showing a time domain realization $h_{nss_{l,n}}^{\prime(\mu)}$. The area depicted by the DFT block is the original output of the IDFT $h_{nss_{l,n}}^{\prime(\mu)}$. Shifting $h_{nss_{l,n}}^{\prime(\mu)}$ by $\Delta n$ samples means that the signal strength near the edges approaches 0 for sufficient over-sampling.

Referring again to Figs. 4 and 6, for the sample spaced channel model the tap delays are integer spaced, i.e. $\tau_q^{(\mu)} = qm$, where m is a positive integer. For the non-sample spaced channel model, however, $\tau_q^{(\mu)}$ is defined as real valued within the interval $[0, QT_{spl}]$. Including a cyclic shift of $\Delta n$, the received pilot signal transformed to time domain is given by

$$\varsigma_{\tilde{l}}^{[cyc]} \overset{\Delta}{=} \frac{1}{N_P'} c_{cyc}[-\Delta n] \tilde{F}^H \tilde{Y}_{\tilde{l}}'$$

$$\approx \frac{1}{N_P'} \sum_{\mu=1}^{N_T} \tilde{F}^H \tilde{X}_{\tilde{l}}^{\prime(\mu)} \tilde{F} I_{N_P' \times Q} \tilde{h}_{\tilde{l}}^{\prime[cyc]} + \frac{1}{N_P'} c_{cyc}[-\Delta n] \tilde{F}^H \tilde{N}_{\tilde{l}}'$$

The effect of a non-sample spaced channel model in the time domain signal is for example illustrated in Fig. 4. Due to leakage, perfect separation is no longer possible. From the above equation it can be seen that the receiver structures, originally derived from the sample spaced channel, can be modified for the non-sample spaced channel. To this end the boundaries which are used to separate the signals from different transmit antennas are shifted by $\Delta n$, as indicated in Fig. 4.

Windowing in the frequency domain can reduce the leakage and thus over-sampling is required. Moreover, the extension to MIMO-OFDM channel estimation with the previously discussed simplification is possible as the simplified estimator structure in accordance with the present invention is generally applicable to all DFT based channel estimation schemes.

Furthermore, the separation boundaries for the signals impinging from different transmit antennas can be further optimized. A method to determine $\Delta n$, the number of samples the samples the separation boundary between signals from different antennas are shifted, will in the following be described.

In case the power delay profile is unknown, the cyclic shift is set to

$$\Delta n = \left( N'_P / N_T - N_{GI} \right)/2 \ .$$

However, the actual maximum delay of the channel $\tau_Q^{(\mu)} / T_{spl}$ is often smaller than $N_{GI}$, which is the worst case for the maximum delay of the channel. In case that $\tau_Q^{(\mu)} / T_{spl} < N_{GI}$ for all transmit antennas, the cyclic shift $\Delta n$ can be increased which reduces the leakage.

A more sophisticated approach to determine $\Delta n$ is to utilize the power delay profile of the channel which can be estimated by for example an adaptive algorithm, e.g. the well-known least mean squares (LMS) algorithm. Assumed that $Q_0$ taps of the channel impulse response are within the interval [0,Q], with $Q < N'_P / N_T$. furthermore, assume that the time domain channel estimate of antenna $\mu$, $\hat{h}_{\bar{l},n}^{(\mu)}$ is in the interval [$(\mu-1)N'_P/N_T+1$, $\mu N'_P/N_T$]. Within this interval, some signal components from antenna $\mu + 1$ is spilled in the $\mu^{th}$ interval. The leakage described by $f_{N_{FFT}}(n-\tau/T)$ is monotonically decreasing with respect to $n \in I$ within the interval $\tau/T-N_{FFT}/2 < n < \tau/T+N_{FFT}/2$. Thus, for fixed $\tau$, the leakage from antenna $\mu+1$ to the $\mu$ interval is monotonically decreasing. By determining the $\mu^{th}$ local minimum of the estimated power delay profile of the $\mu^{th}$ interval with the position $n = n_{\min}^{(\mu)}$, one possibility to optimize $\Delta n$ is found to be

$$\Delta n = \frac{1}{N_T} \sum_{\mu=1}^{N_T} \left( N'_P / N_T - n_{\min}^{(\mu)} \right) \ .$$

This approach averages over the power delay profiles for all transmit antennas and is therefore relatively robust to estimation errors of the power delay profile. The effect of shifting the separation boundaries by $\Delta n$ samples is indicated in Fig. 4. It is clear that by shifting the separation boundaries does minimize the leakage effect and thus minimizes the interference from other transmit antennas' signals.

The above equation is appropriate if the power delay profile for all $N_T$ transmit antennas of similar length. Otherwise it may be preferable to specify cyclic shift which is dependent on $\mu$

Moreover, depending on certain implementation requirements, the inventive methods for processing an impulse response of a channel can be implemented in hardware or in software. The implementation can be performed using a digital storage medium, in particular a disc or a CD having electronically readable control signals stored thereon, which can cooperate with a programmable computer system such that the inventive methods are performed. Generally, the present invention is, therefore, a computer-program product with a program code stored on a machine-readable carrier, the program code being for performing the inventive methods, when the computer program product runs on a computer. In other words, the inventive method is, therefore, a computer program having a program code for performing the inventive methods, when the computer program runs on a computer.

**Claims**

1. Apparatus for processing a time-domain impulse response estimate of a channel affected by aliasing effects and comprising a set of discrete points, wherein each point has a value and an ordering index, the channel being a non-sample spaced channel, the impulse response estimate of the channel as represented by the set of values having a falling edge, a rising edge and a minimum between the falling edge and the rising edge, wherein the rising edge is present because of said aliasing effects introduced by transforming a frequency-domain estimate of the non-sample spaced channel into said impulse response estimate, the apparatus comprising:

   a minimum searcher (101) for searching a point having a minimum value, the minimum value being associated with a certain ordering index; and

means (107) for manipulating points having ordering indices above the certain ordering index in the set of discrete points to obtain a processed set of points, in which the influence of the non-sample spaced nature of the channel is reduced.

2. Apparatus in accordance with claim 1, wherein the minimum searcher (101) is operative to search the minimum value within an interval of points defined by a first and a last ordering index in the set of discrete points, the interval being derived from a pre-knowledge of the channel, the interval including less points than the set of discrete points.

3. Apparatus in accordance with claim 2, wherein the pre-knowledge of the channel is a channel length, wherein the last ordering index is associated with a point having the highest ordering index in the set of discrete points, and wherein the first ordering index is set such that a size of the interval is determined by the channel length.

4. Apparatus in accordance with claim 2, wherein the pre-knowledge of the channel is a channel energy, wherein the last ordering index is associated with a point having the highest ordering index in the set of discrete points, and wherein the first ordering index is set such that an energy of values of the discrete points in the interval is determined by the channel energy.

5. Apparatus in accordance with claims 2 to 4, wherein the minimum searcher (101) is operative for determining magnitudes of points, and wherein the minimum searcher (101) is further operative to search the smallest magnitude among the magnitudes.

6. Apparatus in accordance with any one of the preceding claims, wherein the means (107) for manipulating is operative to compare a value of a point having a highest ordering index in the set of discrete points with a predetermined value, and to zero the points above minimum having ordering indices above the certain index, when the value of the point having the highest index is smaller than the predetermined value, or to place the points above the minimum having ordering indices higher than the certain ordering index at the beginning of the set of discrete values, when the value is greater than the predetermined value.

7. Apparatus in accordance with claims 1 to 5, wherein the means (107) for manipulating is operative to compare an energy of discrete points having ordering indices higher than the certain ordering index to a predetermined energy value and to zero the points above minimum having ordering indices above the certain index, when the energy is smaller than the predetermined energy or to place the points above the minimum having ordering indices higher than the certain order index at the beginning of the set of values, when the energy is greater than the predetermined energy value.

8. Apparatus in accordance with claims 1 to 5, in which the means (107) for manipulating is operative to re-order the set of discrete points by placing points having ordering indices equal or above the certain ordering index before the point having a low ordering index of the set of discrete points.

9. Apparatus in accordance with claim 8, wherein the low ordering index is a lowest ordering index in the set of discrete points.

10. Apparatus in accordance with any one of the preceding claims, in which the means (107) for manipulating is operative to zero values of the points having ordering indices above the certain ordering index.

11. Apparatus in accordance with claims 1 to 9, in which the means (107) for manipulating is operative to re-order the set of values such that points having ordering indices above the certain ordering index become ordering indices lower than the ordering indices associated with the falling edge in the processed set of points.

12. Apparatus in accordance with any one of the preceding claims, further comprising means for transmitting the processed set of discrete points having the channel impulse response in a correct order to a data detector.

13. Apparatus in accordance with any one of the preceding claims, wherein the set of values further includes a further impulse response of a further channel, wherein the further channel extends from a further transmitting point to a common receiving point, wherein the further channel has a further falling edge aliasing with the rising edge because of the non-sample spaced nature of the channel, wherein the minimum searcher (101) is operative for searching the minimum within an interval defined by a first and a second ordering index, the second ordering index being determined by the highest ordering index of the set of discrete points, the first ordering index being obtained by subtracting a pre-known maximum channel length from the second ordering index, and wherein the means (107) for manipulating is operative to generate the processed set of discrete points such that points having ordering indices above the minimum point become ordering indices in the set of processed value below a point having a lowest ordering index in the set of discrete value.

14. Apparatus in accordance with any one of the preceding claims, wherein the means (107) for manipulating is operative to insert a number of zeros between the falling edge and the rising edge for extending the channel impulse response to obtain a processed set having a length different from a length of the set of discrete points.

15. Apparatus in accordance with claim 14, wherein the length of the processed set is equal to $2^n$, wherein n is an integer.

16. Apparatus in accordance with any one of the preceding claims, further comprising:

   means (501) for providing a threshold, the threshold being determined such that the threshold is higher than a first value in the set of values, the magnitude of which being dominated by aliasing and such that the threshold is lower than a second value in the set of values the magnitude of which being dominated by the channel rather than the aliasing;
   means (507) for comparing values of the set of values to the threshold; and
   means (513) for discarding values, the magnitude of which being lower than the threshold,

   wherein the means (507) for comparing and means (513) for discarding are operative on discrete points attributed to the rising edge.

17. Apparatus in accordance with any one of the preceding claims, wherein the means (107) for manipulating is a selector (705) for selecting a group from the set of discrete points, wherein the group includes values representing the channel impulse response, wherein the group includes a number of discrete points determined by a pre-known channel length, and wherein the means (107) for manipulating is operative to select the group by selecting the number of successive discrete points starting with a discrete point having a lowest order index in the set of discrete points.

18. Apparatus in accordance with claims 13 to 16, wherein the minimum searcher (101) is operative for searching a first and a second minimum, the first minimum being associated with a first ordering index, the first minimum being in a first interval having a length determined by a pre-known channel length, the second minimum being associated with a second ordering index, the second minimum being in a second interval having a length determined by the pre-known channel length, wherein a first discrete point in the first interval has a lowest ordering index in the set of discrete points and wherein a discrete point in the second interval has a highest ordering index in the set of discrete points, wherein the selector (705) is operative to select a first set of discrete points extending from the discrete point having the lowest ordering index in the set of discrete points to the discrete point having the first ordering index, and to select a second set of successive discrete points extending from the discrete point having the second ordering index to the discrete point having the highest ordering index in the set of discrete points, wherein the second set of discrete points is a rising edge of the channel impulse response and wherein the first set of discrete points is a part of the channel impulse response after the rising edge.

19. Method for processing a time-domain impulse response estimate of a channel affected by aliasing effects and comprising a set of discrete points, wherein each point has a value and an ordering index, the channel being a non-sample spaced channel, the impulse response estimate of the channel as represented by the set of values having a falling edge, a rising edge and a minimum between the falling edge and the rising edge, wherein the rising edge is present because of said aliasing effects introduced by transforming a frequency-domain estimate of the non-sample spaced channel into said impulse response estimate, the method comprising the following steps:

   searching a point having a minimum value, the minimum value being associated with a certain ordering index; and
   manipulating points having ordering indices above the certain ordering index in the set of discrete points to obtain a processed set of points, in which the influence of the non-sample spaced nature of the channel is reduced.

20. Computer program having a program code for performing the method for processing an impulse response in accordance with claim 19, when the program runs on a computer.

**Patentansprüche**

1. Vorrichtung zum Verarbeiten einer Zeitbereichimpulsantwortschätzung eines Kanals, die durch Aliasing-Effekte beeinflusst wird und einen Satz von diskreten Punkten aufweist, wobei jeder Punkt einen Wert und einen Ordnungsindex aufweist, wobei der Kanal ein nichtabtastwertbeabstandeter Kanal ist, wobei die Impulsantwortschätzung des Kanals, wie dieselbe durch den Satz von Werten dargestellt wird, eine abfallende Flanke, eine ansteigende Flanke und ein Minimum zwischen der abfallenden Flanke und der ansteigenden Flanke aufweist, wobei die ansteigende Flanke aufgrund der Aliasing-Effekte vorliegt, die durch ein Umwandeln einer Frequenzbereichschätzung des nicht-abtastwertbeabstandeten Kanals zu der Impulsantwortschätzung eingeführt werden, wobei die Vorrichtung folgende Merkmale aufweist:

   eine Minimumsuchvorrichtung (101) zum Suchen eines Punktes, der einen Minimalwert aufweist, wobei der Minimalwert einem bestimmten Ordnungsindex zugeordnet ist; und
   eine Einrichtung (107) zum Manipulieren von Punkten, die Ordnungsindizes über dem bestimmten Ordnungsindex in dem Satz von diskreten Punkten aufweisen, um einen verarbeiteten Satz von Punkten zu erhalten, bei dem der Einfluss der nicht-abtastwertbeabstandeten Beschaffenheit des Kanals verringert ist.

2. Vorrichtung gemäß Anspruch 1, bei der die Minimumsuchvorrichtung (101) wirksam ist, um den Minimalwert innerhalb eines Intervalls von Punkten zu suchen, das durch einen ersten und einen letzten Ordnungsindex in dem Satz von diskreten Punkten definiert ist, wobei das Intervall aus einer Vorkenntnis des Kanals abgeleitet wird, wobei das Intervall weniger Punkte als der Satz von diskreten Punkten umfasst.

3. Vorrichtung gemäß Anspruch 2, bei der die Vorkenntnis des Kanals eine Kanallänge ist, wobei der letzte Ordnungsindex einem Punkt zugeordnet ist, der den höchsten Ordnungsindex in dem Satz von diskreten Punkten aufweist, und wobei der erste Ordnungsindex derart gesetzt ist, dass eine Größe des Intervalls durch die Kanallänge bestimmt wird.

4. Vorrichtung gemäß Anspruch 2, bei der die Vorkenntnis des Kanals eine Kanalenergie ist, wobei der letzte Ordnungsindex einem Punkt zugeordnet ist, der den höchsten Ordnungsindex in dem Satz von diskreten Punkten aufweist, und wobei der erste Ordnungsindex derart gesetzt ist, dass eine Energie von Werten der diskreten Punkte in dem Intervall durch die Kanalenergie bestimmt wird.

5. Vorrichtung gemäß einem der Ansprüche 2 bis 4, bei der die Minimumsuchvorrichtung (101) wirksam ist zum Bestimmen von Größen von Punkten, und wobei die Minimumsuchvorrichtung (101) ferner wirksam ist, um die kleinste Größe unter den Größen zu suchen.

6. Vorrichtung gemäß einem der vorhergehenden Ansprüche, bei der die Einrichtung (107) zum Manipulieren wirksam ist, um einen Wert eines Punktes, der einen höchsten Ordnungsindex in dem Satz von diskreten Punkten aufweist, mit einem vorbestimmten Wert zu vergleichen, und die Punkte über einem Minimum, die Ordnungsindizes über dem bestimmten Index aufweisen, auf Null zu setzen, wenn der Wert des Punktes, der den höchsten Index aufweist, kleiner als der vorbestimmten Wert ist, oder die Punkte über dem Minimum, die Ordnungsindizes aufweisen, die höher als der bestimmte Ordnungsindex sind, am Beginn des Satzes von diskreten Werten zu platzieren, wenn der Wert größer ist als der vorbestimmte Wert.

7. Vorrichtung gemäß einem der Ansprüche 1 bis 5, bei der die Einrichtung (107) zum Manipulieren wirksam ist, um eine Energie von diskreten Punkten, die Ordnungsindizes aufweisen, die höher als der bestimmte Ordnungsindex sind, mit einem vorbestimmten Energiewert zu vergleichen und die Punkte über einem Minimum, die Ordnungsindizes über dem bestimmten Index aufweisen, auf Null zu setzen, wenn die Energie geringer ist als die vorbestimmte Energie, oder die Punkte über dem Minimum, die Ordnungsindizes aufweisen, die höher als der bestimmte Ordnungsindex sind, am Beginn des Satzes von Werten zu platzieren, wenn die Energie größer ist als der vorbestimmte Energiewert.

8. Vorrichtung gemäß einem der Ansprüche 1 bis 5, bei der die Einrichtung (107) zum Manipulieren wirksam ist, um den Satz von diskreten Punkten durch ein Platzieren von Punkten, die Ordnungsindizes aufweisen, die über oder gleich dem bestimmten Ordnungsindex sind, vor dem Punkt des Satzes von diskreten Punkten, der einen niedrigen Ordnungsindex aufweist, neu zu ordnen.

9. Vorrichtung gemäß Anspruch 8, bei der der niedrige Ordnungsindex ein niedrigster Ordnungsindex in dem Satz von diskreten Punkten ist.

10. Vorrichtung gemäß einem der vorhergehenden Ansprüche, bei der die Einrichtung (107) zum Manipulieren wirksam ist, um Werte der Punkte, die Ordnungsindizes über dem bestimmten Ordnungsindex aufweisen, auf Null zu setzen.

11. Vorrichtung gemäß einem der Ansprüche 1 bis 9, bei der die Einrichtung (107) zum Manipulieren wirksam ist, um den Satz von Werten derart neu zu ordnen, dass Punkte, die Ordnungsindizes über dem bestimmten Ordnungsindex aufweisen, zu Ordnungsindizes werden, die geringer sind als die Ordnungsindizes, die der abfallenden Flanke zugeordnet sind, bei dem verarbeiteten Satz von Punkten.

12. Vorrichtung gemäß einem der vorhergehenden Ansprüche, die ferner eine Einrichtung zum Übertragen des verarbeiteten Satzes von diskreten Punkten, der die Kanalimpulsantwort aufweist, in einer richtigen Reihenfolge an einen Datendetektor aufweist.

13. Vorrichtung gemäß einem der vorhergehenden Ansprüche, bei der der Satz von Werten ferner eine weitere Impulsantwort eines weiteren Kanals umfasst, wobei der weitere Kanal sich von einem weiteren Sendepunkt zu einem gemeinsamen Empfangspunkt erstreckt, wobei der weitere Kanal ein weiteres Abfallende-Flanke-Aliasing mit der ansteigenden Flanke aufgrund der nicht-abtastwertbeabstandeten Beschaffenheit des Kanals aufweist, wobei die Minimumsuchvorrichtung (101) zum Suchen des Minimums innerhalb eines Intervalls wirksam ist, das durch einen ersten und einen zweiten Ordnungsindex definiert ist, wobei der zweite Ordnungsindex durch den höchsten Ordnungsindex des Satzes von diskreten Punkten bestimmt wird, wobei der erste Ordnungsindex durch ein Subtrahieren einer bereits bekannten maximalen Kanallänge von dem zweiten Ordnungsindex erhalten wird, und wobei die Einrichtung (107) zum Manipulieren wirksam ist, um den verarbeiteten Satz von diskreten Punkten derart zu erzeugen, dass Punkte, die Ordnungsindizes über dem Minimumpunkt aufweisen, zu Ordnungsindizes in dem Satz von verarbeiteten Werten unter einem Punkt werden, der einen niedrigsten Ordnungsindex in dem Satz von diskreten Werten aufweist.

14. Vorrichtung gemäß einem der vorhergehenden Ansprüche, bei der die Einrichtung (107) zum Manipulieren wirksam ist, um eine Anzahl von Nullen zwischen der abfallenden Flanke und der ansteigenden Flanke zum Erweitern der Kanalimpulsantwort einzufügen, um einen verarbeiteten Satz zu erhalten, der eine Länge aufweist, die sich von einer Länge des Satzes von diskreten Punkten unterscheidet.

15. Vorrichtung gemäß Anspruch 14, bei der die Länge des verarbeiteten Satzes gleich $2^n$ ist, wobei n eine Ganzzahl ist.

16. Vorrichtung gemäß einem der vorhergehenden Ansprüche, die ferner folgende Merkmale aufweist:

eine Einrichtung (501) zum Liefern einer Schwelle, wobei die Schwelle derart bestimmt wird, dass die Schwelle höher ist als ein erster Wert in dem Satz von Werten, wobei die Größe desselben durch Aliasing dominiert wird, und derart, dass die Schwelle niedriger ist als ein zweiter Wert in dem Satz von Werten, wobei die Größe desselben durch den Kanal anstatt durch das Aliasing dominiert wird;
eine Einrichtung (507) zum Vergleichen von Werten des Satzes von Werten mit der Schwelle; und
eine Einrichtung (513) zum Verwerfen von Werten, wobei deren Größe geringer ist als die Schwelle, wobei die Einrichtung (507) zum Vergleichen und die Einrichtung (513) zum Verwerfen bei diskreten Punkten wirksam sind, die der ansteigenden Flanke zugewiesen sind.

17. Vorrichtung gemäß einem der vorhergehenden Ansprüche, bei der die Einrichtung (107) zum Manipulieren eine Auswähleinrichtung (705) zum Auswählen einer Gruppe aus dem Satz von diskreten Punkten ist, wobei die Gruppe Werte umfasst, die die Kanalimpulsantwort darstellen, wobei die Gruppe eine Anzahl von diskreten Punkten umfasst, die durch eine bereits bekannte Kanallänge bestimmt wird, und wobei die Einrichtung (107) zum Manipulieren wirksam ist, um die Gruppe durch ein Auswählen der Anzahl von aufeinander folgenden diskreten Punkten beginnend mit einem diskreten Punkt, der einen niedrigsten Ordnungsindex in dem Satz von diskreten Punkten aufweist, auszuwählen.

18. Vorrichtung gemäß einem der Ansprüche 13 bis 16, bei der die Minimumsuchvorrichtung (101) wirksam ist zum Suchen eines ersten und eines zweiten Minimums, wobei das erste Minimum einem ersten Ordnungsindex zugeordnet ist, wobei das erste Minimum in einem ersten Intervall ist, das eine Länge aufweist, die durch eine bereits bekannte Kanallänge bestimmt wird, wobei das zweite Minimum einem zweiten Ordnungsindex zugeordnet ist, wobei das zweite Minimum in einem zweiten Intervall ist, das eine Länge aufweist, die durch die bereits bekannte Kanallänge bestimmt wird, wobei ein erster diskreter Punkt in dem ersten Intervall einen niedrigsten Ordnungsindex in dem Satz von diskreten Punkten aufweist, und wobei ein diskreter Punkt in dem zweiten Intervall einen höchsten Ordnungsindex in dem Satz von diskreten Punkten aufweist, wobei die Auswähleinrichtung (705) wirksam ist, um einen ersten Satz von diskreten Punkten auszuwählen, der sich von dem diskreten Punkt, der den niedrigsten Ordnungsindex in dem Satz von diskreten Punkten aufweist, zu dem diskreten Punkt erstreckt, der den ersten Ordnungsindex aufweist, und um einen zweiten Satz von aufeinander folgenden diskreten Punkten auszuwählen, der sich von dem diskreten Punkt, der den zweiten Ordnungsindex aufweist, zu dem diskreten Punkt erstreckt, der den höchsten Ordnungsindex in dem Satz von diskreten Punkten aufweist, wobei der zweite Satz von diskreten Punkten eine ansteigende Flanke der Kanalimpulsantwort ist, und wobei der erste Satz von diskreten Punkten ein Teil der Kanalimpulsantwort nach der ansteigenden Flanke ist.

19. Verfahren zum Verarbeiten einer Zeitbereichimpulsantwortschätzung eines Kanals, die durch Aliasing-Effekte beeinflusst wird und einen Satz von diskreten Punkten aufweist, wobei jeder Punkt einen Wert und einen Ordnungsindex aufweist, wobei der Kanal ein nichtabtastwertbeabstandeter Kanal ist, wobei die Impulsantwortschätzung des Kanals, wie dieselbe durch den Satz von Werten dargestellt wird, eine abfallende Flanke, eine ansteigende Flanke und ein Minimum zwischen der abfallenden Flanke und der ansteigenden Flanke aufweist, wobei die ansteigende Flanke aufgrund der Aliasing-Effekte vorliegt, die durch ein Umwandeln einer Frequenzbereichschätzung des nichtabtastwertbeabstandeten Kanals zu der Impulsantwortschätzung eingeführt werden, wobei das Verfahren folgende Schritte aufweist:

Suchen eines Punktes, der einen Minimalwert aufweist, wobei der Minimalwert einem bestimmten Ordnungsindex zugeordnet ist; und
Manipulieren von Punkten, die Ordnungsindizes über dem bestimmten Ordnungsindex in dem Satz von diskreten Punkten aufweisen, um einen verarbeiteten Satz von Punkten zu erhalten, bei dem der Einfluss der nicht-abtastwertbeabstandeten Beschaffenheit des Kanals verringert ist.

20. Computerprogramm mit einem Programmcode zum Durchführen des Verfahrens zum Verarbeiten einer Impulsantwort gemäß Anspruch 19, wenn das Programm auf einem Computer abläuft.

## Revendications

1. Appareil pour traiter une estimation de réponse impulsionnelle dans le domaine du temps d'un canal affecté par des effets de repliement et comprenant un ensemble de points discrets, dans lequel chaque point a une valeur et un indice d'ordre, le canal étant un canal non espacé d'un échantillon, l'estimation de réponse impulsionnelle du canal représentée par l'ensemble de valeurs présentant un bord descendant, un bord ascendant et un minimum entre le bord descendant et un bord ascendant, dans lequel le bord ascendant est présent par suite desdits effets de repliement introduits par la transformation d'une estimation dans le domaine de la fréquence du canal non espacé d'un échantillon en ladite estimation de réponse impulsionnelle, l'appareil comprenant :

un chercheur de minimum (101) destiné à rechercher un point ayant une valeur minimale, la valeur minimale étant associée à un certain indice d'ordre ; et
un moyen (107) destiné à manipuler les points ayant des indices d'ordre au-dessus du certain indice d'ordre dans l'ensemble de points discrets, pour obtenir un ensemble de points traité, dans lequel l'influence de la nature non espacée d'un échantillon du canal est réduite.

2. Appareil selon la revendication 1, dans lequel le chercheur de minimum (101) est opérationnel pour rechercher la valeur minimale dans un intervalle de points défini par un premier et un dernier indice d'ordre dans l'ensemble de points discrets, l'intervalle étant dérivé d'une connaissance préalable du canal, l'intervalle comportant moins de points que l'ensemble de points discrets.

3. Appareil selon la revendication 2, dans lequel la connaissance préalable du canal est une longueur de canal, dans lequel le dernier indice d'ordre est associé à un point ayant l'indice d'ordre le plus élevé dans l'ensemble de points discrets, et dans lequel le premier indice d'ordre est réglé de sorte qu'une grandeur de l'intervalle soit déterminée par la longueur de canal.

4. Appareil selon la revendication 2, dans lequel la connaissance préalable du canal est une énergie de canal, dans lequel le dernier indice d'ordre est associé à un point ayant l'indice d'ordre le plus élevé dans l'ensemble de points discrets, et dans lequel le premier indice d'ordre est réglé de sorte qu'une énergie de valeurs des points discrets dans l'intervalle est déterminée par l'énergie de canal.

5. Appareil selon les revendications 2 à 4, dans lequel le chercheur de minimum (101) est opérationnel pour déterminer des amplitudes de points, et dans lequel le chercheur de minimum (101) est, par ailleurs, opérationnel pour rechercher l'amplitude la plus petite parmi les amplitudes.

6. Appareil selon l'une quelconque des revendications précédentes, dans lequel le moyen (107) destiné à manipuler est opérationnel pour comparer une valeur d'un point ayant un indice d'ordre le plus élevé dans l'ensemble de points discrets avec une valeur prédéterminée, et pour régler à zéro les points au-dessus du minimum ayant des indices d'ordre au-dessus du certain index lorsque la valeur du point ayant l'index le plus élevé est inférieure à la valeur prédéterminée, ou pour régler les points au-dessus du minimum ayant des indices d'ordre plus élevés que le certain indice d'ordre au début de l'ensemble de valeurs discrètes lorsque la valeur est supérieure à la valeur prédéterminée.

7. Appareil selon les revendications 1 à 5, dans lequel le moyen (107) destiné à manipuler est opérationnel pour comparer une énergie de points discrets ayant des indices d'ordre plus élevés que le certain indice d'ordre à une valeur d'énergie prédéterminée et pour régler à zéro les points au-dessus du minimum ayant des indices d'ordre au-dessus du certain indice lorsque l'énergie est inférieure à l'énergie prédéterminée ou pour placer les points au-dessus du minimum ayant des indices d'ordre plus élevés que le certain indice d'ordre au début de l'ensemble de valeurs lorsque l'énergie est supérieure à la valeur d'énergie prédéterminée.

8. Appareil selon les revendications 1 à 5, dans lequel le moyen (107) destiné à manipuler est opérationnel pour réordonner l'ensemble de points discrets en plaçant les points ayant des indices d'ordre égaux au ou au-dessus du certain indice d'ordre avant le point ayant un bas indice d'ordre de l'ensemble de points discrets.

9. Appareil selon la revendication 8, dans lequel le bas indice d'ordre est un indice d'ordre le plus bas dans l'ensemble de points discrets.

10. Appareil selon l'une quelconque des revendications précédentes, dans lequel le moyen (107) destiné à manipuler est opérationnel pour régler à des valeurs zéro les points ayant des indices d'ordre au-dessus du certain indice d'ordre.

11. Appareil selon les revendications 1 à 9, dans lequel le moyen (107) destiné à manipuler est opérationnel pour réordonner l'ensemble de valeurs de sorte que les points ayant des indices d'ordre au-dessus du certain indice d'ordre obtiennent des indices d'ordre plus bas que les indice d'ordre associés au bord descendant dans l'ensemble de points traité.

12. Appareil selon l'une quelconque des revendications précédentes, comprenant, par ailleurs, un moyen pour transmettre l'ensemble de points discrets traité ayant la réponse impulsionnelle de canal dans un ordre correct à un détecteur de données.

13. Appareil selon l'une quelconque des revendications précédentes, dans lequel l'ensemble de valeurs comporte, par ailleurs, une autre réponse impulsionnelle d'un autre de canal, dans lequel l'autre canal s'étend d'un autre point de transmission à un point de réception commun, dans lequel l'autre canal présente un autre bord descendant en repliement avec le bord ascendant du fait de la nature de canal non espacé d'échantillon, dans lequel le chercheur de minimum (101) est opérationnel pour rechercher le minimum dans un intervalle défini par un premier et un deuxième indice d'ordre, le deuxième indice d'ordre étant déterminé par l'indice d'ordre le plus élevé de l'ensemble de points discrets, le premier indice d'ordre étant obtenu en soustrayant une longueur de canal maximale connue préalablement du deuxième indice d'ordre, et dans lequel le moyen (107) destiné à manipuler est opérationnel pour générer de l'ensemble de points discrets traité de sorte que les points ayant des indices d'ordre au-dessus du point minimum obtiennent des indices d'ordre dans l'ensemble de valeurs traité au-dessous d'un point ayant un indice d'ordre le plus bas dans l'ensemble de valeurs discrète.

14. Appareil selon l'une quelconque des revendications précédentes, dans lequel le moyen (107) destiné à manipuler est opérationnel pour insérer un certain nombre de zéros entre le bord descendant et le bord ascendant, pour prolonger la réponse impulsionnelle de canal afin d'obtenir un ensemble traité ayant une longueur différente d'une longueur de l'ensemble de points discrets.

**15.** Appareil selon la revendication 14, dans lequel la longueur de l'ensemble traité est égale à $2^n$, où n est un nombre entier.

**16.** Appareil selon l'une quelconque des revendications précédentes, comprenant par ailleurs :

un moyen (501) destiné à fournir un seuil, le seuil étant déterminé de sorte que le seuil soit supérieur à une première valeur dans l'ensemble de valeurs dont l'amplitude est dominée par repliement et de sorte que le seuil soit inférieur à une deuxième valeur dans l'ensemble de valeurs dont l'amplitude est dominée par le canal plutôt que par le repliement ;

un moyen (507) destiné à comparer les valeurs de l'ensemble de valeurs avec le seuil ; et

un moyen (513) destiné à écarter les valeurs dont l'amplitude est inférieure au seuil, dans lequel le moyen (507) destiné à comparer et le moyen (513) destiné à écarter sont opérationnels sur les points discrets attribués au bord ascendant.

**17.** Appareil selon l'une quelconque des revendications précédentes, dans lequel le moyen (107) destiné à manipuler est un sélecteur (705) destiné à sélectionner un groupe parmi l'ensemble de points discrets, dans lequel le groupe comporte des valeurs représentant la réponse impulsionnelle de canal, dans lequel le groupe comporte un certain nombre de points discrets déterminés par une longueur de canal connue préalablement, et dans lequel le moyen (107) destiné à manipuler est opérationnel pour sélectionner le groupe en sélectionnant le nombre de points discrets successifs en commençant par un point discret ayant un indice d'ordre le plus bas dans l'ensemble de points discrets.

**18.** Appareil selon les revendications 13 à 16, dans lequel le chercheur de minimum (101) est opérationnel pour rechercher un premier et un deuxième minimum, le premier minimum étant associé à un premier indice d'ordre, le premier minimum étant dans un premier intervalle ayant une longueur déterminée par une longueur de canal connue préalablement, le deuxième minimum étant associé à un deuxième indice d'ordre, le deuxième minimum étant dans un deuxième intervalle ayant une longueur déterminée par la longueur de canal connue préalablement, dans lequel un premier point discret dans le premier intervalle a un indice d'ordre le plus bas dans l'ensemble de points discrets et dans lequel un point discret dans le deuxième intervalle a un indice d'ordre le plus élevé dans l'ensemble de points discrets, dans lequel le sélecteur (705) est opérationnel pour sélectionner un premier ensemble de points discrets s'étendant du point discret ayant l'indice d'ordre le plus bas dans l'ensemble de points discrets au point discret ayant le premier indice d'ordre, et pour sélectionner un deuxième ensemble de points discrets successifs s'étendant du point discret ayant le deuxième indice d'ordre au point discret ayant l'indice d'ordre le plus élevé dans l'ensemble de points discrets, dans lequel le deuxième ensemble de points discrets est un bord ascendant de la réponse impulsionnelle de canal et dans lequel le premier ensemble de points discrets est une partie de la réponse impulsionnelle de canal après le bord ascendant.

**19.** Procédé pour traiter une estimation de réponse impulsionnelle dans le domaine du temps d'un canal affecté par des effets de repliement et comprenant un ensemble de points discrets, dans lequel chaque point a une valeur et un indice d'ordre, le canal étant un canal non espacé d'un échantillon, l'estimation de réponse impulsionnelle du canal représenté par l'ensemble de valeurs présentant un bord descendant, un bord ascendant et un minimum entre le bord descendant et le bord ascendant, dans lequel le bord ascendant est présent par suite desdits effets de repliement introduits en transformant une estimation dans le domaine de fréquence du canal non espacé d'un échantillon en ladite estimation de réponse impulsionnelle, le procédé comprenant les étapes suivantes consistant à :

rechercher un point ayant une valeur minimale, la valeur minimale étant associée à un certain indice d'ordre ; et

manipuler les points ayant des indices d'ordre au-dessus du certain indice d'ordre dans l'ensemble de points discrets, pour obtenir un ensemble de points traité, dans lequel l'influence de la nature non espacée d'un échantillon du canal est réduite.

**20.** Programme d'ordinateur ayant un code de programme pour exécuter le procédé pour traiter une réponse impulsionnelle selon la revendication 19 lorsque le programme se déroule sur un ordinateur.

# Fig 1

103

Minimum searcher ~101

105

Set of discrete points

$$[x(0),x(1),...,x(n-1)]$$

109

Means for manipulating points

107

Processed set of discrete points

$$[y(0),y(1),...,y(k-1)]$$

111

# Fig 2a

Set of discrete points

discrete point

[x(0),x(1),x(2),...,x(n-2),x(n-1)]

discrete value    ordering index

⇓

Processed set of discrete points

[y(0)=x(n-2),y(1)=x(n-1), y(2)=x(0),y(3)=x(1),y(4)=x(2),y(5)=x+3,...,y(n-1)=x(n-3)]

EP 1 584 168 B1

# Fig 2b

Set of discrete points

discrete point

$[x(0),x(1),x(2),...,x(n-2),x(n-1)]$

discrete value    ordering index

Processed set of discrete points

$[y(0)=x(n-2),y(1)=x(n-1),\ y(2)=x(0),y(3)=x(1),y(4)=x(2),y(5)=0,...,\ y(n-1)=0]$

EP 1 584 168 B1

EP 1 584 168 B1

# Fig 2c

Set of discrete points

$[x(0),x(1),x(2),...,x(n-2),x(n-1)]$

⇩

Processed set of discrete points

$[y(0)=x(0),y(1)=x(1), y(2)=x(2),y(3)=0,..., y(n-1)=0]$

EP 1 584 168 B1

# Fig 2d

Set of discrete points

$[x(0),x(1),x(2),...,x(K-2),x(K-1),...,x(n-1)]$

Processed set of discrete points

$[y(0)=x(0),y(1)=x(1), y(2)=x(2),...,y(K-1)=x(k-1)]$

# Fig 3

cyclicshift

$\Delta n$ ┌─rising edge of a
channel impulse response

DFT block

minimum

$\Delta n$

set of discrete
points

channel impulse
response

Processed set of
discrete points

n

34

EP 1 584 168 B1

# Fig 4

Set of discrete points

channel impulse response

further channel impulse response

rising edge of the channel impulse response

Alias from antenna NT

Alias from antenna 1

$\Delta n$

further minimum

$N_P$

minimum

Processed set of discrete points

EP 1 584 168 B1

## Fig 5

EP 1 584 168 B1

503

Means for
providing a
threshold — 501

505

Set of discrete points

[x(0),x(1),...,x(n-1)]

509

Means for
comparing — 507

511

Means for
discarding

515

513

Processed set of discrete points

[y(0),y(1),...,y(K-1)]

517

## Fig 6

Fig 7

channel
information
of a first
channel

channel
information
of a further
channel

• • •

• • •

• • •

707

Means for determining
channel information

processed set of
discrete points

first group

• • •    • • •    • • •

further
group

704

705

Selector

transformed signal
(set of discrete
points)

• • • • • •

703

Transformer

input signal

701

received signal

complex-conjugated
amplitude sequence

# Fig 8

OFDM modulation

805

OFDM demodulation

$X_{l,i}$ → S/P → IFFT → Insert guard interval +GI → P/S → $x_{l,i}$

$y_{l,i}$ → S/P → Remove guard interval -GI → FFT → P/S → $Y_{l,i}$

801 803 807 809 811 813

815

EP 1 584 168 B1

39

Fig 9

EP 1 584 168 B1